(19) Europäisches Patentamt
European Patent Office
Office européen des brevets

(11) EP 2 382 260 B1

(12) **EUROPEAN PATENT SPECIFICATION**

(45) Date of publication and mention of the grant of the patent:
**15.06.2016 Bulletin 2016/24**

(21) Application number: **10700732.0**

(22) Date of filing: **12.01.2010**

(51) Int Cl.:
***C08J 5/18*** *(2006.01)*

(86) International application number:
**PCT/EP2010/050241**

(87) International publication number:
**WO 2010/084049 (29.07.2010 Gazette 2010/30)**

(54) **FILM**

FILM

PELLICULE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **23.01.2009 US 146943 P**

(43) Date of publication of application:
**02.11.2011 Bulletin 2011/44**

(73) Proprietor: **Evonik Degussa GmbH**
**45128 Essen (DE)**

(72) Inventors:
- **GRASS, Michael**
  **45721 Haltern am See (DE)**
- **PETTIJOHN, Ted**
  **Magnolia, Texas 77354 (US)**
- **BUCHHOLZ, Stefan**
  **63456 Hanau (DE)**
- **ELLERMANN, Gerhard**
  **45768 Marl (DE)**
- **DRENG, Tore**
  **N-3261 Larvik (NO)**
- **FOLLESTAD, Arild**
  **N-3910 Stathelle (NO)**
- **LINDROOS, Jarmo**
  **N-3930 Ulefoss (NO)**

(56) References cited:
**US-A1- 2006 201 544** **US-B1- 6 300 415**

- **DATABASE WPI Week 200433 Thomson Scientific, London, GB; AN 2004-350412 XP002570337 & JP 2004 042937 A (DAINIPPON PRINTING CO LTD) 12 February 2004 (2004-02-12)**
- **DATABASE WPI Week 199532 Thomson Scientific, London, GB; AN 1995-243157 XP002570338 & JP 07 148895 A (DAINIPPON PRINTING CO LTD) 13 June 1995 (1995-06-13)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 382 260 B1

## Description

The present invention relates to a film comprising an interpolymer of ethylene and 3-methyl-1-butene. The invention also relates to a process for the preparation of the film and to the use of the film.

Polyethylene is widely used in the manufacture of films, often for use in packaging applications.

The use of films to form laminates for use in the packaging industry is, for instance, well known. Laminates are used to form a range of articles, for example, food containers, stand up pouches and product labels. The laminates are often transparent and are formed when a film is coated onto a substrate. Films used for this purpose therefore need to possess a certain combination of properties. Specifically the films need excellent optical properties, i. e. low haze so as to be sufficiently transparent. The films also should possess high levels of gloss to provide the necessary aesthetic appearance, as well as impact strength, to make the films usable. Without adequate mechanical properties such as impact strength and puncture resistance, thicker films have to be made which is economically unattractive and in some cases less aesthetically appealing. It is also important that films have adequate stiffness, particularly if they are to be used in the preparation of stand up pouches. Obtaining films having a desirable combination of impact strength and stiffness is often a challenge.

Another common application of polyethylene films in the packaging industry is in the formation of bags or sacks. These are used, for example, in the packaging of food stuffs such as cereals and crisps, as well as much heavier materials such as sand, cement mix, compost, stones etc. It is often desirable for the bags to be transparent in order that their content can be easily determined. More significantly, however, and especially in the case of heavy duty sacks (e. g. bags and sacks designed for the packaging of materials up to 25 kg, or even 50 kg in weight) the key requirement is that they possess good mechanical properties such as impact strength and puncture resistance. This is necessary as bags and sacks are usually transported on pallets, one on top of the other. Hence the total load on at least some of the sacks is extremely high, e. g. in the region of 1000 kg or more, in some instances. Additionally a certain level of stiffness, e. g. for stability on pallets, is usually desirable.

Films having attractive combinations of properties, especially optical performance as well as mechanical strength, particularly impact strength and puncture resistance, are therefore highly desired for use in the packaging industry. The difficulty often encountered, however, is that those polymer properties that minimize, e. g. haze, are often those that are detrimental to, e. g. impact strength. Additionally those polymers possessing low haze and reasonable impact strength, often have poor stiffness.

It is therefore common to utilize interpolymers and/or blends of polymers in the manufacture of films to try to provide the desired balance of film properties. Thus ethylene may be copolymerized with comonomers such as 1-butene or 1-hexene in order to obtain a polymer yielding films having increased dart drop strength. In other words comonomers are generally used to tailor the properties of a polymer to suit its target film application. There are vast numbers of commercially available films that are made from ethylene and 1-hexene and especially 1-butene copolymers that provide advantages of ethylene homopolymer films.

A film manufactured from ethylene/1-octene or ethylene/1-hexene copolymer, for example, typically has improved impact strength (e. g. dart drop) compared to an ethylene/1-butene copolymer of the same density as dart drop strength generally increases with the increasing molecular weight of the comonomer. On the other hand, however, the ethylene/1-octene and ethylene/1-hexene copolymers are more difficult to make economically. The comonomers themselves are more expensive and their polymerization into copolymers is more expensive primarily because of the increased boiling point of the comonomers (b.p. 1-butene -6 °C, b.p. 1-pentene 30 °C, b.p. 1-hexene 63 °C and b.p. 1-octene 122 °C). This means, for example, that it is much more difficult to remove excess comonomer from the final comonomer. There is therefore a trade off between polymer properties such as transparency and impact strength and the cost of polymer and film production.

Figure 1 shows dart drop (film impact strength) plotted versus film stiffness.
Figures 2 shows puncture strength plotted versus film stiffness.
Figures 3 and 4 show haze and gloss plotted against film stiffness.
Figure 5 shows minimum fusion temperature plotted against film stiffness.

Accordingly there remains a need for polymer films that are suitable for making packaging items such as laminate films and bags or sacks with an appropriate combination of optical properties, especially transparency and gloss, and mechanical properties, in particular impact strength. As always there is also a need for the film to be capable of being manufactured cost effectively. Since the margins on many packaging products are small, it is important that packaging costs are kept to a minimum.

It has now been surprisingly found that films comprising an interpolymer of ethylene and a 3-substituted $C_{4-10}$ alkene, wherein said interpolymer is made using a catalyst system comprising a single site catalyst, have excellent optical properties as well as high impact strength. More specifically it has been unexpectedly found that such interpolymers

yield films having optical properties that are better than those of conventional ethylene/1-octene copolymers and comparable, or in some cases, of increased impact strength and of unique puncture resistance. At the same time, the interpolymers and therefore films are cheaper to prepare than corresponding ethylene/1-octene copolymers, In other words, the films of the present invention possess a very attractive balance of properties and may be produced cost efficiently.

Films comprising an interpolymer of ethylene and a 3-substituted $C_{4-10}$ alkene have been generically disclosed in the background art but it has never been realized before that a polyethylene interpolymer with a 3-substituted $C_{4-10}$ alkene would provide film with such an advantageous combination of low haze, high gloss and high impact strength. WO2008/006636, for example, discloses copolymers of ethylene and 3-methyl-1-butene and teaches that they may be used in the manufacture of films. No films are, however, exemplified and it is not disclosed what might be the advantageous properties of any such films.

Similarly EP-A-1197501 discloses copolymers of ethylene and a vinyl compound, which may be vinylcyclohexane, vinylcyclopentane, 3-methyl-1-butene or 3-methyl-1-pentene, although vinylcyclohexane is preferred, and teaches that the copolymer may be used as an adhesive in the manufacture of a molded article such as a film. More specifically it is shown in the examples of EP-A-1197501 that copolymers comprising ethylene and vinylcyclohexane perform well as an adhesive to polypropylene in comparison to a copolymer comprising styrene or a polyethylene homopolymer. Neither the optical properties nor the mechanical properties of a film comprising an ethylene/3-methyl-1-butene copolymer are tested.

Polyethylene films having a high dart drop impact strength in combination with a low moisture vapor transmission rate are disclosed in WO 2008/003020. It is also taught therein that the polyethylene may be a copolymer wherein the comonomer is selected from 1-butene, 1-pentene, 1-hexene, 3-methyl-1-butene, 4-methyl-1-pentene, 1-heptene, 1-octene, 1-nonene, 1-decene or combinations thereof. No films comprising 3-methyl-1-butene are, however, exemplified.

In one embodiment, the present invention provides a film comprising an interpolymer of ethylene and a 3-substituted $C_{4-10}$ alkene, namely 3-methyl-1-butene, wherein said interpolymer is made using a catalyst system comprising a single site catalyst, namely a metallocene-containing catalyst system.

In a preferred embodiment of the present invention, said interpolymer is made using a particulate catalyst system. Particularly preferably the catalyst system comprises a carrier.

In a further preferred embodiment of the present invention, the film is a blown film.

In a further preferred embodiment of the present invention, the film is an industrial film.

In another embodiment, the present invention provides a process for the preparation of a film as hereinbefore described comprising blowing an interpolymer of ethylene and a 3-substituted $C_{4-10}$ alkene, wherein said interpolymer is made using a catalyst system comprising a single site catalyst.

In another embodiment, the present invention provides the use of a film as hereinbefore described in packaging.

## Definitions

All ranges mentioned herein include all values and subvalues between the lower limit and the higher limit of the range, including the end points of the range.

As used herein, the term "interpolymer" refers to polymers comprising repeat units deriving from ethylene and a 3-substituted $C_{4-10}$ alkene monomer. The interpolymer may also contain repeat units deriving from other monomers, e. g. $C_{3-10}$ alkenes. Preferred interpolymers are binary (i. e. preferred interpolymers are copolymers) and comprise repeat units deriving from ethylene and one type of 3-substituted $C_{4-10}$ alkene comonomer. Other preferred interpolymers are ternary, e. g. they comprise repeat units deriving from ethylene, one type of 3-substituted $C_{4-10}$ alkene comonomer and another $C_{3-10}$ alkene. Particularly preferred interpolymers are copolymers. In preferred interpolymers at least 0.01 %wt, still more preferably at least 0.1 %wt, e. g. at least 0.5 %wt of each monomer is present based on the total weight of the interpolymer.

The term "alkene homopolymer" as used herein refers to polymers which consist essentially of repeat units deriving from one type of $C_{2-6}$ alkene, e. g. ethylene. Homopolymers may, for example, comprise at least 99.9 %wt e. g. at least 99.99 %wt of repeat units deriving from one type of $C_{2-6}$ alkene based on the total weight of the polymer.

As used herein, the term "3-substituted $C_{4-10}$ alkene" refers to an alkene having: (i) a backbone containing 4 to 10 carbon atoms, wherein the backbone is the longest carbon chain in the molecule that contains an alkene double bond, and (ii) a substituent (i. e. a group other than H) at the 3 position.

As used herein, the term "catalyst system" refers to the total active entity that catalyses the polymerization reaction. Typically the catalyst system is a coordination catalyst system comprising a transition metal compound (the active site precursor) and an activator (sometimes referred to as a cocatalyst) that is able to activate the transition metal compound. The catalyst system of the present invention preferably comprises an activator, at least one transition metal active site precursor and a particle building material that may be the activator or another material. Preferably, the particle building material is a carrier.

As used herein, the term "multisite catalyst system" refers to a catalyst system comprising at least two different active sites deriving from at least two chemically different active site precursors. A multisite catalyst system used in the present invention comprises at least one single site catalyst. Examples of a multisite catalyst system are one comprising two or three different metallocene active sites precursors or one comprising a Ziegler Natta active site and a metallocene active site. If there are only two active sites in the catalyst system, it can be called a dual site catalyst system. Particulate multisite catalyst systems may contain its different active sites in a single type of catalyst particle. Alternatively, each type of active site may each be contained in separate particles. If all the active sites of one type are contained in separate particles of one type, each type of particles may enter the reactor through its own inlet.

As used herein, the term "single site catalyst refers" to a catalyst having one type of active catalytic site. An example of a single site catalyst is a metallocene-containing catalyst. A typical Ziegler Natta (ZN) catalyst made from, e. g. impregnation of $TiCl_4$ into a carrier material, or chromium oxide (Philips) catalyst made from, e. g. impregnation of chromium oxide into silica, are not single site catalysts as they contain a mixture of different types of sites that give rise to polymer chains of different composition.

As used herein, the term particulate catalyst system means a catalyst system that when fed to the polymerization reactor or into the polymerization section, has its active sites or active site(s) precursors within solid particles, preferably porous particles. This is, in contrast, to catalyst systems with active sites, or precursor compounds, that are liquid or are dissolved in a liquid. It is generally presumed that when carrying out a polymerization using a particulate catalyst the particles of the catalyst will be broken down to catalyst fragments. These fragments are thereafter present within polymer particles whenever the polymerization is carried out in conditions whereby solid polymer forms. The particulate catalyst system may be prepolymerized during the catalyst preparation production process or later. The term particulate catalyst system also includes the situation wherein an active site or active site precursor compound contacts a carrier just before, or at the same time, as the active site or active site precursor compound contacts the monomer in the polymerization reactor.

As used herein, the term "slurry polymerization" refers to a polymerization wherein the polymer forms as a solid in a liquid. The liquid may be a monomer of the polymer. In the latter case the polymerization is sometimes referred to as a bulk polymerization. The term slurry polymerization encompasses what is sometimes referred to in the art as supercritical polymerization, i. e. a polymerization wherein the polymer is a solid suspended in a fluid that is relatively close to its critical point, or if the fluid is a mixture, its pseudocritical point. A fluid may be considered relatively close to its critical point if its compressibility factor is less than double its critical compressibility factor or, in the case of a mixture, its pseudocritical compressibility factor.

Gas phase polymerization is a term of the art and is readily understood by the skilled man.

As used herein, the term "solution polymerization" refers to a polymerization wherein, in the polymerization reactor, the polymers are dissolved in a solvent.

As used herein, the term "polymerization section" refers to all of the polymerization reactors present in a multistage polymerization. The term also encompasses any prepolymerization reactors that are used.

As used herein, the term "multimodal" refers to a polymer comprising at least two components, which have been produced under different polymerization conditions and/or by using a multisite catalyst system in one stage and/or by using two or more different catalysts in a polymerization stage resulting in different (weight average) molecular weights and molecular weight distributions for the components. The prefix "multi" refers to the number of different components present in the polymer. Thus, for example, a polymer consisting of two components only is called "bimodal". The form of the molecular weight distribution curve, i. e. the appearance of the graph of the polymer weight fraction as a function of its molecular weight, of a multimodal polyalkene will show two or more maxima or at least be distinctly broadened in comparison with the curves for the individual components. In addition, multimodality may show as a difference in melting or crystallization temperature of components.

In contrast a polymer comprising one component produced under constant polymerization conditions is referred to herein as unimodal.

As used herein, the term "laminate" refers to a film structure comprising at least one film layer and a substrate. The film structure is prepared by adhering said film layer(s) to said substrate. During the adhesion process, the film layer(s) and the substrate are solid (i. e. they do not form a melt or liquid during the adhesion process).

As used herein, the term "lamination film" refers to the film layer(s) that are used in the lamination process. The lamination film may comprise 1 or more (e. g. 3, 5, 7) layers.

As used herein, the term "substrate" refers to the material to which at least one lamination film is adhered. It may, for example, comprise a polymer, a metal or paper. If the substrate is polymeric, it preferably has a higher melting/softening point than the lamination film.

## Ethylene

Ethylene for use in preparation of films of the invention is commercially available from numerous suppliers, e.

g. from Sigma Aldrich.

Substituted $C_{4-10}$ alkene

Preferably, the substituent present at carbon 3 of the 3-substituted $C_{4-10}$ alkene is a $C_{1-6}$ alkyl group. The alkyl group may be substituted by non-hydrocarbyl substituents or unsubstituted. Representative examples of non-hydrocarbyl substituents that may be present on the alkyl group include F and Cl. Preferably, however, the $C_{1-6}$ alkyl group is unsubstituted. Particularly preferably the substituent group present at carbon 3 is a $C_{1-3}$ alkyl group such as methyl, ethyl or *iso*-propyl. Methyl is an especially preferred substituent group.

Preferably, the 3-substituted $C_{4-10}$ alkene is solely substituted at carbon 3. If, however, a substituent is present at another position it is preferably a $C_{1-6}$ alkyl group as described above for the substituent present at carbon 3.

The 3-substituted $C_{4-10}$ alkene is preferably a monoalkene. Still more preferably the 3-substituted $C_{4-10}$ alkene is a terminal alkene. In other words, the 3-substituted $C_{4-10}$ alkene is preferably unsaturated at carbon numbers 1 and 2. Preferred 3-substituted $C_{4-10}$ alkenes are thus 3-substituted $C_{4-10}$ alk-1-enes.

Preferred 3-substituted $C_{4-10}$ alkenes for use in the interpolymers are those of formula (I):

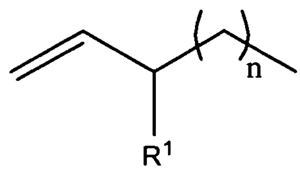

(I)

wherein $R^1$ is a substituted or unsubstituted, preferably unsubstituted, $C_{1-6}$ alkyl group and n is an integer between 0 and 6.

In preferred compounds of formula (I) $R^1$ is methyl or ethyl, e. g. methyl. In further preferred compounds of formula (I) n is 0, 1 or 2, still more preferably 0 or 1, e. g. 0.

Representative examples of compounds of formula (I) that can be used in the interpolymers include 3-methyl-1-butene, 3-methyl-1-pentene, 3-methyl-1-hexene, 3-ethyl-1-pentene and 3-ethyl-1-hexene. A particularly preferred 3-substituted $C_{4-10}$ alkene is 3-methyl-1-butene.

3-substituted $C_{4-10}$ alkenes for use in the invention are commercially available, e. g. from Sigma-Aldrich. 3-methyl-1-butene can be made, e. g. according to WO 2008/006633.

3-methyl-1-butene is the 3-substituted $C_{4-10}$ alkene used according to the invention.

Other $C_{3-8}$ Alkene

The interpolymer may comprise one or more additional $C_{3-8}$ alkene. Preferably, the amount of additional $C_{3-8}$ alkene present in the interpolymer is 0.01 - 15 %wt, more preferably 0.1 - 10 %wt, e. g. 1 - 5 %wt.

Preferably, the additional $C_{3-8}$ alkene is a monoalkene. Still more preferably the $C_{3-8}$ alkene is a terminal alkene. In other words, the $C_{3-8}$ alkene is preferably unsaturated at carbon numbers 1 and 2. Preferred $C_{3-8}$ alkenes are thus $C_{3-8}$ alk-1-enes.

The $C_{3-8}$ alkene is preferably a linear alkene. Still more preferably the $C_{3-8}$ alkene is an unsubstituted $C_{3-8}$ alkene.

Representative examples of $C_{3-8}$ alkenes that may be present in the interpolymer include propylene, 1-butene, 1-pentene, 4-methyl-1-pentene, 1-hexene and 1-octene. Preferably, the $C_{3-8}$ alkene is selected from propylene, 1-butene, 4-methyl-1-pentene or mixtures therefore.

$C_{3-8}$ alkenes for use in the present invention are commercially available. Alternatively, propylene and but-1-ene may be prepared by thermal cracking. Linear olefins are available from catalytic oligomerization of ethylene or by Fischer Tropsch synthesis.

Preferably, the interpolymer does not comprise an alkene other than ethylene or 3-substituted $C_{4-10}$ alkene.

Catalyst system

The catalyst system used in the process of the present invention comprises a single site catalyst, namely a metallocene-containing catalyst system.

The catalyst system used in the process of the present invention may be in solution form or particulate form. For gas phase and slurry polymerization, the catalyst system is preferably in the form of particles. For solution polymerization, the catalyst system preferably is in solution (i. e. in a dissolved state).

Particulate catalyst system

When in particulate form, the catalyst system is preferably in the form of particles having a weight average particle size of 1 to 250 microns, preferably 4 to 150 microns. Preferably, the catalyst system is in the form of a free-flowing powder.

Such catalyst systems are well known in the art, e. g. from WO98/02246, the contents of which are hereby incorporated herein by reference. The catalyst system particles may be synthesized by producing the solid particles from liquid starting material components without a separate impregnation step or they may be made by first producing a solid particle and then impregnating the active site precursors into it.

The particulate catalyst system preferably comprises a carrier, an activator and at least one transition metal active site precursor (e. g. a metallocene). The activator is preferably aluminoxane, borane or borate but preferably is aluminoxane. Preferably, the active site precursor is a metallocene.

Suitable carrier materials for use in the catalyst system are well known in the art. The carrier material is preferably an inorganic material, e. g. an oxide of silicon and/or of aluminium or $MgCl_2$. Preferably, the carrier is an oxide of silicon and/or aluminium. Still more preferably the carrier is silica.

Preferably, the carrier particles have an average particle size of 1 to 500 microns, preferably 3 to 250 microns, e. g. 10 to 150 microns. Particles of appropriate size can be obtained by sieving to eliminate oversized particles. Sieving can be carried out before, during or after the preparation of the catalyst system. Preferably, the particles are spherical. The surface area of the carrier is preferably in the range 5 to 1200 $m^2/g$, more preferably 50 to 600 $m^2/g$. The pore volume of the carrier is preferably in the range 0.1 to 5 $cm^3/g$, preferably 0.5 - 3.5 $cm^3/g$.

Preferably, the carrier is dehydrated prior to use. Particularly preferably the carrier is heated at 100 to 800 °C, more preferably 150 to 700 °C, e. g. at about 250 °C prior to use. Preferably, dehydration is carried out for 0.5-12 hours.

Carriers that are suitable for the preparation of the catalyst systems herein described are commercially available, e. g. from Grace and PQ Corporation.

Solution catalyst system

The dissolved catalyst system preferably comprises an activator and at least one transition metal active site precursor (e. g. a metallocene). The activator is preferably aluminoxane, borane or borate. Preferably, the active site precursor is a metallocene.

The components of the catalyst system may be in the form of solutions as in US 6,982,311. The components may be mixed before the polymerization, immediately prior to polymerization or fed separately to the polymerization reactor (in which case they contact with each other in the reactor itself). Preferably, the components are prepared as separate solutions and mixed 0.1s - 10 minutes prior to entering the polymerization reactor. During the preparation of the components and the catalyst system care should be taken to ensure that the equipment and solvents are kept inert, i. e. contain no oxygen and water.

The solution(s) (e. g. of the catalyst system or catalyst components) may be formed using any conventional solvent. Preferably, however, the solvent is a saturated $C_{5-11}$ hydrocarbon, more preferably a $C_{5-11}$ alkane, e. g. hexane, heptane, octane or a mixture of $C_{7-10}$ alkanes. Alternatively, toluene may be used as the solvent.

The solution(s) (e. g. of the catalyst system or catalyst components) may also comprise scavengers, e. g. metal alkyls, especially aluminium alkyls.

Optionally, the catalyst system may be particulate form with regard to the active site precursor and in solution with regard to the activator, but this is not preferred.

Activator

Aluminoxane is preferably present in the catalyst system as activator. The aluminoxane is preferably oligomeric. Still more preferably the aluminoxane is a cage-like (e. g. multicyclic) molecule, e. g. with an approximate formula $(AlR_{1.4}O_{0.8})_n$ where n is 1 0- 60 and R is an alkyl group, e. g. a $C_{1-20}$ alkyl group. In preferred aluminoxanes R is a $C_{1-8}$ alkyl group, e. g. methyl. The aluminoxane methylaluminoxane (MAO) is a mixture of oligomers with a distribution of molecular weights, preferably with an average molecular weight of 700 to 1500. MAO is a preferred aluminoxane for use in the catalyst system.

The aluminoxane may be modified with an aluminium alkyl or aluminium alkoxy compound. Especially preferred modifying compounds are aluminium alkyls, in particular, aluminium trialkyls such as trimethyl aluminium, triethyl aluminium and tri isobutyl aluminium. Trimethyl aluminium is particularly preferred.

Aluminoxanes, such as MAO, that are suitable for the preparation of the catalyst systems herein described are commercially available, e. g. from Albemarle and Chemtura.

It is also possible to generate the activator in situ, e. g. by slow hydrolysis of trimethylaluminium inside the

pores of a carrier. This process is well known in the art.

Alternatively, activators based on boron may be used. Preferred boron based activators are those wherein the boron is attached to at least 3 fluorinated phenyl rings as described in EP 520 732. For solution polymerization, boron activators are preferred over other types of activators.

Alternatively, an activating, solid surface as described in US 7,312,283 may be used as a carrier. These are solid, particulate inorganic oxides of high porosity which exhibit Lewis acid or Brønsted acidic behavior and which have been treated with an electron-withdrawing component, typically an anion, and which has then been calcined.

Transition metal active site precursor

Generally the metal of the transition metal precursors are 16-electron complexes, although they may sometimes comprise fewer electrons, e. g. complexes ofTi, Zr or Hf.

The active site transition metal precursor is preferably a metallocene.

The metallocene preferably comprises a metal coordinated by one or more η-bonding ligands. The metal is preferably Zr, Hf or Ti, especially Zr or Hf. The η-bonding ligand is preferably a $\eta^5$-cyclic ligand, i. e. a homo or heterocyclic cyclopentadienyl group optionally with fused or pendant substituents.

The metallocene preferably has the formula:

$$(Cp)_mL_nMX_p$$

wherein Cp is an unsubstituted or substituted cyclopentadienyl group, an unsubstituted or substituted indenyl or an unsubstituted or substituted fluorenyl (e. g. an unsubstituted or substituted cyclopentadienyl group);

the optional one or more substituent(s) being independently selected from halogen (e. g. Cl, F, Br, I), hydrocarbyl (e. g. $C_{1-20}$ alkyl, $C_{2-20}$ alkenyl, $C_{2-20}$ alkynyl, $C_{6-20}$ aryl or $C_{6-20}$ arylalkyl), $C_{3-12}$ cycloalkyl which contains 1, 2, 3 or 4 heteroatom(s) in the ring moiety, $C_{6-20}$ heteroaryl, $C_{1-20}$ haloalkyl, -SiR"$_3$, -OSiR"$_3$, -SR", -PR"$_2$ or -NR"$_2$,

each R" is independently a H or hydrocarbyl, e. g. e. g. $C_{1-20}$ alkyl, $C_{2-20}$ alkenyl, $C_{2-20}$ alkynyl, $C_{6-20}$ aryl or $C_{6-20}$ arylalkyl; or in the case of -NR"$_2$, the two R" can form a ring, e. g. a 5 or 6 membered ring, together with the nitrogen atom to which they are attached;

L is a bridge of 1 - 7 atoms, e. g. a bridge of 1 - 4 C atoms and 0 - 4 heteroatoms, wherein the heteroatom(s) can be, e. g. Si, Ge and/or 0 atom(s), wherein each of the bridge atoms may independently bear substituents (e. g. $C_{1-20}$ alkyl, tri($C_{1-20}$ alkyl)silyl, tri($C_{1-20}$alkyl)siloxy or $C_{6-20}$ aryl substituents); or a bridge of 1-3, e. g. one or two, heteroatoms, such as Si, Ge and/or O atom(s), e. g. -SiR"'$_2$, wherein each R'" is independently $C_{1-20}$ alkyl, $C_{6-20}$ aryl or tri($C_{1-20}$alkyl)silyl residue such as trimethylsilyl;

M is a transition metal of Group 3 to 10, preferably of Group 4 to 6, such as Group 4, e. g. titanium, zirconium or hafnium, preferably hafnium,

each X is independently a sigma ligand such as halogen (e. g. Cl, F, Br, I), hydrogen, $C_{1-20}$ alkyl, $C_{1-20}$ alkoxy, $C_{2-20}$ alkenyl, $C_{2-20}$ alkynyl, $C_{3-12}$ cycloalkyl, $C_{6-20}$ aryl, $C_{6-20}$ aryloxy, $C_{7-20}$ arylalkyl, $C_{7-20}$ arylalkenyl, -SR", -PR"$_3$, -SiR"$_3$, -OSiR"$_3$,-NR"$_2$, or $CH_2$-Y wherein Y is $C_{6-20}$ aryl, $C_{6-20}$ heteroaryl, $C_{1-20}$ alkoxy, $C_{6-20}$ aryloxy, -NR"$_2$, -SR", -PR"$_3$, -SiR"$_3$ or -OSiR"$_3$; alternatively, two X ligands are bridged to provide a bidentate ligand on the metal, e. g. 1,3-pentadiene;

each of the above mentioned ring moieties alone or as part of another moiety as the substituent for Cp, X, R" or R"' can be further substituted, e. g. with $C_{1-20}$ alkyl, which may contain Si and/or O atom(s);

m is 1, 2 or 3, preferably 1 or 2, more preferably 2;

n is 0, 1 or 2, preferably 0 or 1;

p is 1, 2 or 3 (e. g. 2 or 3); and

the sum of m + p is equal to the valence of M (e. g. when M is Zr, Hf or Ti, the sum of m+ p should be 4).

Preferably, Cp is a cyclopentadienyl group, especially a substituted cyclopentadienyl group. Preferred substituents on Cp groups, including cyclopentadienyl, are $C_{1-20}$ alkyl. Preferably, the cyclopentadienyl group is substituted with a straight chain $C_{1-6}$ alkyl group, e. g. n-butyl.

If present L is preferably a methylene, ethylene or silyl bridge whereby the silyl can be substituted as defined above, e. g. a (dimethyl)Si=, (methylphenyl)Si= or (trimethylsilylmethyl)Si=; n is 1; m is 2 and p is 2. When L is a silyl bridge, R" is preferably other than H. More preferably, however, n is 0.

X is preferably H, halogen, $C_{1-20}$ alkyl or $C_{6-20}$ aryl. When X are halogen atoms, they are preferably selected from fluorine, chlorine, bromine and iodine. Most preferably X is chlorine. When X is a $C_{1-20}$ alkyl group, it is preferably a straight chain or branched $C_{1-8}$ alkyl group, e. g. a methyl, ethyl, n-propyl, n-hexyl or n-octyl group. When X is an $C_{6-20}$ aryl group, it is preferably phenyl or benzyl. In preferred metallocenes X is a halogen, e. g. chlorine.

Suitable metallocene compounds include:

bis(cyclopentadienyl)metal dihalides, bis(cyclopentadienyl)metal hydridohalides, bis(cyclopentadienyl)metal monoalkyl monohalides, bis(cyclopentadienyl)metal dialkyls and bis(indenyl)metal dihalides wherein the metal is zirconium or hafnium, preferably hafnium, halide groups are preferably chlorine and alkyl groups are preferably $C_{1-6}$ alkyl.

Representative examples of metallocenes include:

bis(cyclopentadienyl)$ZrCl_2$, bis(cyclopentadienyl)$HfCl_2$, bis(cyclopentadienyl)$ZrMe_2$, bis(cyclopentadienyl)$HfMe_2$, bis(cyclopentadienyl)Zr(H)Cl, bis(cyclopentadienyl)Hf(H)Cl, bis(n-butylcyclopentadienyl)$ZrCl_2$, bis(n-butylcyclopentadienyl)$HfCl_2$, bis(n-butylcyclopentadienyl)$ZrMe_2$, bis(n-butylcyclopentadienyl)$HfMe_2$, bis(n-butylcyclopentadienyl)Zr(H)Cl, bis(n-butylcyclopentadienyl)Hf(H)Cl, bis(pentamethylcyclopentadienyl)$ZrCl_2$, bis(pentamethylcyclopentadienyl)$HfCl_2$, bis-(1,3-dimethylcyclopentadienyl)$ZrCl_2$, bis(4,5,6,7-tetrahydro-1-indenyl)$ZrCl_2$ and ethylene-[bis(4,5,6,7-tetrahydro-1-indenyl)$ZrCl_2$.

Alternatively, the metallocene may be a constrained geometry catalyst (CGC). These comprise a transition metal, M (preferably Ti) with one eta- cyclopentadienyl ligand and two X groups, i. e. be of the formula $CpMX_2$, wherein X is as defined above and the cyclopentadienyl has a $-Si(R'')_2N(R'')-$ substituent wherein R" is as defined above and the N atom is bonded directly to M. Preferably, R" is $C_{1-20}$ alkyl. Preferably, the cyclopentadienyl ligand is additionally substituted with 1 to 4, preferably 4, $C_{1-20}$ alkyl groups. Examples of metallocenes of this type are described in US 2003/0022998, the contents of which are hereby incorporated by reference.

The preparation of metallocenes can be carried out according to, or analogously to, the methods known from the literature and is within the skills of a polymer chemist.

Other types of single site precursor compounds are described in:

G.J.P. Britovsek et al.: The Search for New-Generation Olefin Polymerization Catalysts: Life beyond Metallocenes, Angew. Chemie Int. Ed., 38 (1999), p. 428.
H. Makio et al.: FI Catalysts: A New Family of High Performance Catalysts for Olefin Polymerization, Advanced Synthesis and Catalysis, 344 (2002), p. 477.
Dupont-Brookhart type active site precursors are disclosed in US 5,880,241.

Particulate catalyst system preparation

To form the catalyst systems for use in the present invention, the carrier, e. g. silica, is preferably dehydrated (e. g. by heating). The further preparation of the catalyst system is preferably undertaken under anhydrous conditions and in the absence of oxygen and water. The dehydrated carrier is then preferably added to a liquid medium to form a slurry. The liquid medium is preferably a hydrocarbon comprising 5 to 20 carbon atoms, e. g. pentane, isopentane, hexane, isohexane, heptane, octane, nonane, decane, dodecane, cyclopentane, cyclohexane, cycloheptane, toluene and mixtures thereof. Isomers of any of the afore-mentioned hydrocarbons may also be used. The volume of the liquid medium is preferably sufficient to fill the pores of the carrier, and more preferably to form a slurry of the carrier particles. Typically the volume of the liquid medium will be 2 to 15 times the pore volume of the support as measured by nitrogen adsorption method (BET method). This helps to ensure that a uniform distribution of metals on the surface and pores of the carrier is achieved.

In a separate vessel, the metallocene may be mixed with aluminoxane in a solvent. The solvent may be a hydrocarbon comprising 5 to 20 carbon atoms, e. g. toluene, xylene, cyclopentane, cyclohexane, cycloheptane, pentane, isopentane, hexane, isohexane, heptane, octane or mixtures thereof. Preferably, toluene is used. Preferably, the metallocene is simply added to the toluene solution in which the aluminoxane is present in its commercially available form. The volume of the solvent is preferably about equal to or less than the pore volume of the carrier. The resulting mixture is then mixed with the carrier, preferably at a temperature in the range 0 to 60 °C. Impregnation of the metallocene and aluminoxane into the carrier is preferably achieved using agitation. Agitation is preferably carried out for 15 minutes to 12 hours. Alternatively, the carrier may be impregnated with aluminoxane first, followed by metallocene. Simultaneous impregnation with aluminoxane and metallocene is, however, preferred.

The solvent and/or liquid medium are typically removed by filtering and/or decanting and/or evaporation, preferably by evaporation only. Optionally, the impregnated particles are washed with a hydrocarbon solvent to remove extractable metallocene and/or aluminoxane. Removal of the solvent and liquid medium from the pores of the carrier material is preferably achieved by heating and/or purging with an inert gas. Removal of the solvent and liquid medium is preferably carried out under vacuum. Preferably, the temperature of any heating step is below 80 °C, e. g. heating

may be carried out at 40-70 °C. Typically heating may be carried out for 2 to 24 hours. Alternatively, the catalyst system particles may remain in a slurry form and used as such when fed to the polymerization reactor, however, this is not preferred.

The metallocene and aluminoxane loading on the carrier is such that the amount of aluminoxane (dry), on the carrier ranges from 10 to 90 %wt, preferably from 15 to 50 %wt, still more preferably from 20 to 40 %wt based on the total weight of dry solid catalyst. The amount of transition metal on the carrier is preferably 0.005 - 0.2 mmol/g of dry solid catalyst, still more preferably 0.01 - 0.1 mmol/g of dry solid catalyst.

The molar ratio of Al:transition metal in the solid catalyst system may range from 25 to 10,000, usually within the range of from 50 to 980 but preferably from 70 to 500 and most preferably from 100 to 350.

Particulate catalyst system can also be made using a boron activator instead of aluminoxane activator, e. g. as described in US 6,787,608. In its example 1, an inorganic carrier is dehydrated, then surface modified by alkylaluminum impregnation, washed to remove excess alkylaluminum and dried. Subsequently the carrier is impregnated with an about equimolar solution of boron activator and trialkylaluminum, then mixed with a metallocene precursor, specifically a CGC metallocene, then filtered, washed and dried.

Also US 6,350,829 describes the use of boron activator, but using mainly bis metallocene complexes as active site precursors. The dried metal alkyl-treated carrier is co-impregnated with a mixture of the metallocene and the boron activator (without additional metal alkyl), and then the volatiles removed.

The support material may also be mixed with the metallocene solution just before polymerization. US 7,312,283 describes such a process. A porous metal oxide particulate material is impregnated with ammonium sulphate dissolved in water, and then calcined in dry air, kept under nitrogen, then mixed with a hydrocarbon liquid. Separately a solution was prepared by mixing metallocene with 1-alkene, and then mixing in metal alkyl. Polymerization was done in a continuous slurry reactor, into which both the sulphated particulate metal oxide and the metallocene solution were fed continuously, in such a way that the two feed streams were mixed immediately before entering the reactor. Thus the treated metal oxide functions both as an activator as well as a catalyst support.

Alternative methods of supporting single site catalysts via a preformed carrier and aluminoxane are given in EP 279 863, WO 93/23439, EP 793 678, WO 96/00245 and WO 97/29134.

Alternative methods of supporting single site catalysts via preformed carriers and boron activators are given inWO 91/09882 and WO 97/31038.

Methods of obtaining particulate catalyst systems without employing preformed carriers are given in EP 810 344, EP 792 297, EP 1 246 849 and EP 1 323 747.

Multisite catalyst systems

Multisite catalyst systems for use in the polymerization comprise a single site catalyst.

The multisite catalyst system may be hybrids from two (or more) different catalyst families. For instance, Ziegler Natta and single site catalytic sites may be used together, e. g. by impregnating metallocene site precursor and activator for the metallocene into the pores of a particulate Ziegler Natta catalyst. Alternatively, chromium oxide may be used together with a metallocene, e. g. by impregnating, under inert conditions, metallocene site precursor and activator for the metallocene into the pores of a particulate, thermally activated chromium oxide catalyst.

Single site catalysts are particularly useful in the preparation of multisite catalyst systems. A preferred multisite catalyst system is one comprising two metallocenes, e. g. one having a tendency to make higher molecular weight polymer and one having a tendency to make lower molecular weight polymer or one having a tendency to incorporate comonomer and one having a lesser tendency to do so. The two metallocenes may, for instance, be isomeric metallocenes in about the same ratio as made in their synthesis. Preferably, however, the multisite catalyst system comprises one active site making a polymer component of both lower molecular weight and lower comonomer incorporation than another site. Dual site catalyst systems (multisite catalyst systems with two sites) containing such sites are particularly preferred.

High catalyst activity/productivity

A feature of the above-described catalyst system, particularly in gas and slurry phase polymerization, is that it has a high activity coefficient in the copolymerization of ethylene and 3-substituted $C_{4-10}$ alkene at a polymerization temperature of about 80 °C. Preferably, the activity coefficient of the catalyst system is at least 200 g polyalkene/(g cat. system, h, bar), still more preferably the activity coefficient of the catalyst system is at least 300 g polyalkene/(g cat. system, h, bar), e. g. at least 350 g polyalkene/(g cat. system, h, bar). There is no upper limit on the activity coefficient, e. g. it may be as high as 1000 g polyalkene/(g cat. system, h, bar).

The high catalytic productivity has many advantages. For instance, it decreases the production cost of the polymer and minimizes any safety risks associated with the handling of catalytic materials as less are required. Additionally the ability to use a lesser amount of catalyst per kg of final polymer in some cases enables production plants to increase

their production output without having to increase their reactor size or catalyst materials feed systems.

Even more significantly, however, the fact that a lesser amount of catalyst system can be used per kg of final polymer means that less catalyst and/or catalyst residues are present in the polymer as impurities and films made there from are much less prone to degradation. This can be achieved without washing (e. g. deashing) the polymer as described below.

Polymerization and downstream process

The interpolymer present in the films of the present invention may be prepared by any conventional polymerization process, e. g. gas phase polymerization and/or slurry polymerization and/or solution polymerization. Preferably, the interpolymer is made using slurry and/or gas phase polymerization, e. g. slurry polymerization.

A prepolymerization may also be employed as is well known in the art. In a typical prepolymerization less than about 5 %wt of the total polymer is produced. A prepolymerization does not count as a stage with regard to consideration of whether a process is a single or multistage process.

Gas Phase Polymerization

Commercial processes

The gas phase polymerization is preferably carried out in a conventional gas phase reactor such as a bed fluidized by gas feed or in a mechanically agitated bed, or in a circulating bed process. Suitable gas phase processes for polyethylene are, for example, Unipol PE gas feed fluidized single reactor process and Unipol PE II gas feed fluidized staged reactor process by Univation, Evolue gas feed fluidized staged reactor process by Mitsui, Innovene gas feed fluidized single reactor process by Ineos, Lupotech G gas fed fluidized single reactor process and Spherilene gas feed fluidized staged reactor process by LyondellBasell, and last part of Borstar PE staged reactor process by Borealis.

Gas phase reactor parameters and operation

The high activity of the polymerization catalyst system with 3-substituted $C_{4-10}$ alkene comonomer allow for efficient gas phase polymerization to be carried out. Preferably, the productivity of the solid catalyst is at least 1000 g polymer per g of solid catalyst system. Still more preferably the productivity of the solid catalyst is at least 1800 g polymer/g catalyst system, e. g. at least 2000 g polymer/g solid catalyst system. The upper limit is not critical but might be in the order of 100 000 g polymer/g solid catalyst system. Preferably, the productivity of the total catalyst system is at least 250 g polymer per g of total catalyst system. Still more preferably the productivity of the total catalyst system is at least 400 g polymer/g total catalyst system, e. g. at least 1000 g polymer/g total catalyst system. The upper limit is not critical but might be in the order of 20000 g polymer/g total catalyst system.

Advantageously, the process typically proceeds without reactor fouling.

The conditions for carrying out gas phase polymerization are well established in the art. The reaction temperature is preferably in the range 30 to 120 °C, e. g. 50 to 100 °C. The total gauge pressure is preferably in the range 1 to 100 bar, e. g. 10 to 40 bar. The total monomer partial pressure is preferably in the range 2 to 20 bar, e. g. 3 to 10 bar. The residence time in each gas phase reactor is preferably in the range 0.3 to 7 hours, more preferably 0.5 to 4 hours, still more preferably 0.7 to 3 hours, e. g. 0.9 to 2 hours.

Hydrogen is also preferably fed into the reactor to function as a molecular weight regulator. In the case of single site catalysts and especially for catalysts with Group 4 metallocenes with at least one cyclopentadienyl group, the molar ratio between the feed of hydrogen and the feed of the ethylene into the reactor system is preferably 1:10 000-1:500.

The concentration in the gas in the reactor of the major monomer, ethylene, is preferably 10 - 70 mol%, more preferably 20 - 50 mol%, while the 3-substituted $C_{4-10}$ alkene comonomer concentration preferably is 1 - 70 mol%, more preferably 5 - 50 mol%.

Preferably, nitrogen is also present in the reactor. It functions, e. g. as a flushing gas.

Preferably, a $C_{3-8}$ saturated hydrocarbon is also fed into the reactor. Particularly preferably a $C_{3-6}$ alkane (e. g. propane, n-butane) is fed into the reactor. It functions to increase heat transfer efficiency, thereby removing heat more efficiently from within the reactor.

Preferably, the gas phase polymerization reaction is carried out as a continuous or semi-continuous process. Thus the monomers, hydrogen and other optional gases are preferably fed continuously or semi-continuously into the reactor. Preferably, the catalyst system is also fed continuously or semi-continuously into the reactor. Still more preferably polymer is continuously or semi-continuously removed from the reactor. By semi-continuously is meant that addition and/or removal is controlled so they occur at relatively short time intervals compared to the polymer residence time in the reactor, e. g. between 20 seconds to 2 minutes, for at least 75 % (e. g. 100 %) of the duration of the polymerization.

Thus in a preferred process the catalyst components or catalyst system is injected into the reactor at a rate equal to its rate of removal from the reactor. An advantage of the process herein described, however, is that because less catalyst system can be used per kg of polymer produced, less catalyst system is removed from the reactor along with polymer. The interpolymers obtained directly from the polymerization reactor(s) therefore comprise less impurities deriving from the catalyst system.

When used in a gas phase polymerization of a 3-substituted $C_{4-10}$ alkene comonomer, the polymerization catalyst system herein described gives a very high activity, enabling a high productivity (g polymer/g catalyst system). Consequently relatively low concentrations of catalyst system are required in the reactor. Preferably, the concentration of the total catalyst system in the gas phase polymerization is less than 3 kg/ton polymer, still more preferably less than 1.5 kg/ton polymer, e. g. less than 0.8 kg/ton polymer.

As mentioned above, the gas phase polymerization reaction preferably comprises a $C_{3-8}$ saturated hydrocarbon such as a $C_{3-6}$ alkane. The function of the $C_{3-8}$ saturated hydrocarbon is to increase the heat removal efficiency in the gas phase reactor. Cooling of particles is achieved by circulating the $C_{3-8}$ saturated hydrocarbon within the reactor through the polymerization zone where it picks up heat from the particles, to a cooling surface, where it is cooled, and then recycled. This process is important, since if any particle overheats sufficiently, it will melt and stick together with another particle or with the reactor wall, i. e. agglomerate. $C_3$-$C_6$ hydrocarbons have higher specific heat capacity than nitrogen and have been found to function more efficiently for heat removal than e. g. nitrogen.

Thus in a typical gas phase polymerization, in addition to the monomers, there is usually added a substantial concentration of $C_{3-8}$ saturated hydrocarbon, e. g. $C_{3-6}$ alkane. For instance, the concentration of $C_{3-8}$ saturated hydrocarbon in the reactor may be in the order of 5-60 mol%.

It has now been found, however, that 3-substituted $C_{4-10}$ alkenes such as 3-methyl-but-1-ene can act as an effective *in situ* means for removing heat. It is possible, and in many cases preferable, to utilize a relatively high partial pressure of 3-substituted $C_{4-10}$ alkene in gas phase polymerization and it has been found that it serves as a means to remove heat from the reactor. This is a further advantage of using a 3-substituted $C_{4-10}$ alkene comonomer instead of e. g. a linear 1-butene or 1-hexene. In this way, the cooling can be improved and the amount of $C_{3-8}$ saturated hydrocarbon, e. g. $C_3$-$C_6$ alkane, can be reduced. The advantage of eliminating addition of $C_{3-8}$ saturated hydrocarbon, e. g. $C_{3-6}$ alkane, is that this gas must be acquired, purified, added, controlled, removed from the reactor and the polymer and separated from the gas mixture, especially in quantities.

An advantage of the above-described gas phase polymerization is therefore that it can be carried out with no additional $C_{3-8}$ saturated hydrocarbon or with less additional $C_{3-8}$ saturated hydrocarbon. In preferred gas phase polymerizations the concentration of $C_{3-8}$ saturated hydrocarbon, e. g. $C_{3-6}$ alkane, is therefore less than 20 %mol, more preferably less than 10 %mol, still more preferably less than 5 %mol. In some cases substantially no $C_{3-8}$ saturated hydrocarbon, e. g. $C_{3-6}$ alkane may be present.

In a further preferred gas phase polymerization the molar ratio of $C_{3-8}$ saturated hydrocarbon, e.g. $C_{3-6}$ alkane, to 3-substituted $C_{4-10}$ alkene is less than 2 : 1, preferably less than 1 : 1, more preferably less than 1 : 2, e. g. less than 1 : 9.

The partial pressure of 3-substituted $C_{4-10}$ alkene present in the gas phase reactor is preferably at least 10 % of the total pressure, more preferably at least 20 % of the total pressure, e. g. at least 40 % of the total pressure.

For instance, a gas phase polymerization may be carried out under the following conditions:

a concentration of $C_{3-6}$ alkane of 0.01 - 5 mol%
a concentration of nitrogen, 10 - 40 mol%,
a concentration of ethylene of 10 - 50 mol%,
a partial pressure of 3-substituted $C_{4-10}$ alkene (e. g. 3-methyl but-1-ene) of more than 20 % of the total pressure in the reactor, and
a concentration of hydrogen of 5 to 1000 ppm mol.

Preferably, the feed of $C_{3-6}$ alkane into the gas phase reactor system (reactor + recirculation system) is less than 100 kg kg/ton polyethylene, preferably less than 30 kg/ton polyethylene, more preferably less than 10 kg/ton polyethylene.

Slurry Phase Polymerization

The slurry polymerization reaction is preferably carried out in conventional circulating loop or stirred tank reactors. Suitable polyalkene processes are, for example, Hostalen staged (where catalyst and polymer sequentially pass from reactor to reactor) tank slurry reactor process for polyethylene by LyondellBasell, LyondellBasell-Maruzen staged tank slurry reactor process for polyethylene, Mitsui staged tank slurry reactor process for polyethylene by Mitsui, CPC single loop slurry polyethylene process by Chevron Phillips, Innovene staged loop slurry process by Ineos and in part the Borstar staged slurry loop and gas phase reactor process for polyethylene by Borealis.

The high activity of the catalyst systems hereinbefore described allow for efficient slurry polymerization to be carried out. The productivity of the total catalyst system is preferably equal to the productivity of the solid catalyst system. Preferably, the productivity achieved based on the total (dry) weight of the catalyst system in the polymerization process is at least 1 ton polymer/kg of catalyst system. Still more preferably the productivity of the total catalyst system is at least 2 ton polymer/kg catalyst system, e. g. at least 3 ton polymer/kg catalyst system. The upper limit is not critical but might be in the order of 30 ton polymer/kg catalyst system. Advantageously, the process typically proceeds without reactor fouling.

Slurry reactor parameters and operation

The conditions for carrying out slurry polymerizations are well established in the art. The reaction temperature is preferably in the range 30 to 120 °C, e. g. 50 to 100 °C. The reaction pressure will preferably be in the range 1 to 100 bar, e. g. 10 to 70 bar. The residence time in the reactor or reactors (i. e. in the polymerization section) is preferably in the range 0.5 to 6 hours, e. g. 1 to 4 hours. The diluent used will generally be an aliphatic hydrocarbon having a boiling point in the range -50 to 100 °C. Preferred diluents include n-hexane, isobutane and propane, especially isobutane.

Hydrogen is also preferably fed into the reactor to function as a molecular weight regulator. Typically, and especially for catalysts with Group 4 metallocenes with at least one cyclopentadienyl group, the molar ratio between the feed of hydrogen and the feed of ethylene into the reactor system is 1 : 10 000-1 : 500.

Preferably, the polymerization reaction is carried out as a continuous or semi-continuous process. Thus the monomers, diluent and hydrogen are preferably fed continuously or semi-continuously into the reactor. Preferably, the catalyst system is also fed continuously or semi-continuously into the reactor. Still more preferably polymer slurry is continuously or semi-continuously removed from the reactor. By semi-continuously is meant that addition and/or removal is controlled so they occur at relatively short time intervals compared to the polymer residence time in the reactor, e. g. between 20 seconds to 2 minutes, for at least 75 % (e. g. 100 %) of the duration of the polymerization.

Thus in a preferred process the catalyst system is preferably injected into the reactor at a rate equal to its rate of removal from the reactor. An advantage of the invention herein described, however, is that because less catalyst system can be used per kg of polymer produced, less catalyst system is removed from the reactor along with polymer. The interpolymers obtained directly from the polymerization therefore comprise less impurities deriving from the catalyst system.

When used with a 3-substituted $C_{4-10}$ alkene comonomer, the particulate, catalyst system herein described gives a very high activity, enabling a high productivity (ton polymer/kg catalyst system). Consequently relatively low concentrations of catalyst system are required in the reactor. Preferably, the concentration of catalyst system in the slurry polymerization is less than 0.3 kg/ton slurry, still more preferably less than 0.2 kg/ton slurry, e. g. less than 0.1 kg/ton slurry. Preferably, the concentration of catalyst system is at least 0.01 kg/ton slurry. Preferably, the concentration of polymer present in the reactor during polymerization is in the range 15 to 55 %wt based on total slurry, more preferably 25 to 50 %wt based on total slurry. Such a concentration can be maintained by controlling the rate of addition of monomer, the rate of addition of diluent and catalyst system and, to some extent, the rate of removal of polymer slurry from the slurry reactor.

Solution Phase polymerization

Polymerization may be conducted in solution (i. e. with the polymer in solution in a solvent). The conditions for carrying out solution phase polymerization are well established in the art. The reaction temperature is preferably 120 - 250 °C. The solvent is preferably a saturated $C_{6-10}$ hydrocarbon or a mixture thereof. The residence time in the reactor(s) is preferably in the range 1 - 30 minutes. The partial pressure of monomer is preferably 20 - 150 bar. The concentration of polymer is preferably 5 - 20 %wt. In addition to solvent, comonomer(s) and catalyst system components, hydrogen may optionally be fed to the reactor.

Multireactor systems may optionally be employed. When used, multistage reactor systems are preferably in a parallel arrangement.

After polymerization, the liquids (solvent and comonomer) are preferably vaporized from the polymer. The polymer is preferably mixed with additives and pelletized as discussed in more detail below.

Multistage Polymerization

The interpolymer may be prepared in a single stage polymerization or in a multistage polymerization.

When a polymer is produced in a multistage process, the reactors may be in parallel or in series but arrangement in series is preferred, e. g. for slurry and gas phase polymerization. For solution polymerization, a parallel arrangement is preferred. If the polymer components are produced in a parallel arrangement in solution polymerization, the solutions

are preferably mixed for homogenization before extrusion.

A multistage polymerization may comprise the above-described slurry polymerization in combination with one or more further polymerizations. Thus, for example, two slurry polymerizations can be carried out in sequence (e. g. in Mitsui, Hostalen or Innovene slurry processes) or a slurry polymerization stage can be followed by a gas phase polymerization stage as described above (e. g. in Borstar or Spheripol processes). Alternatively, a slurry polymerization may be preceded by a gas phase polymerization. A still further possibility is that two gas phase polymerizations are carried out in sequence.

When a polymer is produced in a sequential multistage process, using reactors coupled in series and using different conditions in each reactor, the polymer components produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima or at least a broadening of the molecular weight distribution of each polymer component by itself. The product of a multistage polymerization is usually a multimodal polyalkene. Multistage polymerizations with metallocene catalysts are described in EP 0 993 478 and EP 1 360 213.

Preferred conditions for the slurry and gas phase polymerizations in a multistage process are the same as those described above. It is possible, however, not to add comonomer to one stage of a multistage polymerization. When no comonomer is present in a stage of a multistage polymerization, the polymer component from that stage is an ethylene homopolymer.

Staged processes for polyethylene preferably produce a combination of a major component A of lower molecular weight and lower (especially preferred is zero when producing final products of density higher than 940 g/dm$^3$) comonomer content and one major component B of higher molecular weight and higher comonomer content. Component A is preferably made in a reactor A' wherein the hydrogen level is higher and the comonomer lower than in the reactor B' where component B is made. If reactor A' precedes B', it is preferred that hydrogen should be stripped off from the polymer flow from A' to B'. If reactor B' precedes A', then preferably no extra comonomer is added to reactor B', and it is preferred to remove a significant part of the non converted comonomer from the polymer flow from B' to A'. It is also preferred that the 3-substituted $C_{4-10}$ alkene is used in the reactor where the polymer with highest incorporation of comonomer is produced, and especially preferred in all the reactors of the process where comonomer is used.

When a two stage polymerization is utilized, the lower molecular weight polymer component is preferably produced in the slurry reactor as described in detail above. The higher molecular weight component may be produced in another slurry reactor or in a gas phase reactor. The higher molecular weight component is typically produced using a lower hydrogen/monomer feed. The reactors may be connected in parallel or in series, but preferably they are connected in series, especially if they are slurry or gas phase reactors or a combination of the two. Preferably, the same catalyst system is used in both reactors. Preferably, the catalyst system is only fed into the first reactor and flows from this, along with polymer, to the next reactor(s) in sequence. The higher molecular weight component may be an interpolymer (e. g. copolymer) or homopolymer. Preferably, it is a copolymer, and more preferably, it is a copolymer comprising a 3-substituted $C_{4-10}$ alkene as hereinbefore described.

Preferably, however, the interpolymer is made in a single stage polymerization. Still more preferably the interpolymer is made in a slurry phase polymerization.

Multimodal polymers may alternatively be prepared by using two or more different single site catalysts in a single reactor.

Alternatively, multisite catalyst systems, as described above, may be used to prepare multimodal polymers. In this case, in order to achieve the optimum polymer properties, especially in a single reactor system, it is preferably for the multisite catalyst system to have as high a ratio as possible between the incorporation of comonomer on a more incorporating site I and on another less incorporating site II. It has been surprisingly found that the 3-substituted $C_{4-10}$ alkene comonomer as hereinbefore described, for numerous combinations of active sites, gives a higher ratio compared to the corresponding reaction using conventional comonomers like 1-butene and 1-hexene. Utilizing 3-substituted $C_{4-10}$ alkene with a multisite catalyst system is therefore especially favorable.

Multimodal polymer may therefore be obtained in a single reactor or in a system of two or more reactors, e. g. in a staged reactor process. Preferably, however, a single reactor process (except optional prepolymerization reactors making less than 7 % of the total polymer) is used. Preferably, a multisite catalyst system comprising two or more (e. g. two) metallocene active site precursors is used.

A further possibility is to blend different interpolymers as hereinbefore described, e. g. prior to pelletization. Blending is, however, less preferable to the production of multimodal polymer, e. g. by multistage polymerization or by the use of two or more different single site catalysts in a single reactor.

Multimodal and unimodal polymers

Multimodal interpolymers as hereinbefore described, and especially those wherein the higher molecular weight polymer component A has a higher comonomer content than the lower molecular weight component B, may in some instances possess some advantages over unimodal interpolymers.

Compared to unimodal interpolymer, at the same density (stiffness) and at the same high ease of extrusion as regards extruder screw and die processes, a multimodal interpolymer comprising ethylene and a 3-substituted $C_{4-10}$ alkene may be prepared having a higher stress crack, brittle crack hoop stress failure and/or slow crack growth resistance. Such interpolymers are particularly useful in film applications wherein they enable improved impact resistance and often improved tear resistance.

Multimodal interpolymers as hereinbefore described may also exhibit improved sealing properties (e. g. lower minimum sealing temperature, sealing temperature range broadness) compared to an unimodal polymer of the same density and ease of extrusion. This is useful in the manufacture of films.

Downstream requirements and process

When the final polymer product is obtained from the reactor(s), the polymer is removed therefrom and liquid and/or volatile components are preferably separated from it by stripping, flashing and/or filtration. For instance, for slurry and gas phase processes, the polymer is removed from the reactor section and to remove volatiles, is preferably filtered or flashed. For slurry processes, the diluent is also preferably separated from the polymer by flashing or filtration.

Preferably, the polymer is not subjected to a deashing step, i. e. to washing with an alcohol, optionally mixed with a hydrocarbon liquid, or water.

Preferably, the polymer is dried (e. g. to remove residues of liquids and gases from the reactor).

In order that the polymer can be handled without difficulty, both within and downstream of the polymerization process, the polymer powder from the reactor(s) should be in a free-flowing state, preferably by having relatively large particles of high bulk density, e. g. less than 10 %wt of the polymer being smaller than 100 $\mu$m size, and the dry, loose bulk density being higher than 300 kg/$m^3$.

For solution processes, the solvent is preferably removed by flashing and the melt conveyed directly to the pelletizer after addition.

The major part of the liquid and gaseous components that leave the reactor(s) with the polymer, including unconverted comonomer, is recycled back to the polymerization section.

Preferably, these processes, from the polymerization until the pelletization extruder outlet, are carried out under an inert (e. g. $N_2$) gas atmosphere. Prior to pelletization, the polymer preferably contacts less than 1 kg/ton, still more preferably less than 0.1 kg/ton, water or alcohol. Prior to extrusion, the polymer preferably does not contact acid.

Additives and pelletization

Antioxidants are preferably added (process stabilizers and long term antioxidants) to the polymer, e. g. prior to pelletization. Other additives (antiblocking agents, color masterbatches, antistatics, slip agents, fillers, UV absorbers, lubricants, acid neutralizers, fluoroelastomer and other polymer processing aids (PPA), UV stabilizers, acid scavengers, nucleating agents) may optionally be added to the polymer.

As antioxidant, all types of compounds known for this purpose may be used, such as sterically hindered or semi-hindered phenols, aromatic amines, aliphatic sterically hindered amines, organic phosphates/phosphonites and sulphur-containing compounds (e. g. thioethers).

Preferably, the antioxidant(s) is selected from the group of organic phosphates/phosphonites and sterically hindered or semi-hindered phenols, i. e. phenols which comprise two or one bulky residue(s), respectively, in ortho-position to the hydroxy group, and sulphur containing compounds.

Representative examples of sterically hindered phenolic compounds include 2,6-di-tert.-butyl-4-methyl phenol; pentaerythrityl-tetrakis(3-(3',5'-di-tert.-butyl-4-hydroxyphenyl)-propion-ate; octadecyl 3-(3',5'-di-tert.-butyl-4-hydroxyphenyl)propionate; 1,3,5-trimethyl-2,4,6-tris-(3,5-di-tert.-butyl-4-hydroxyphenyl)benzene; 2,2'-thiodiethylene-bis-(3,5-di-tert.-butyl-4-hydroxyphenyl)-propionate; calcium-(3,5-di-tert.-butyl-4-hydroxy benzyl monoethyl-phosphonate); 1,3,5-tris(3',5'-di-tert.-butyl-4'-hydroxybenzyl)-isocyanurate; bis-(3,3-bis-(4'-hydroxy-3'-tert.-butylphenyl)butanoic acid)-glycolester; 4,4'-thiobis(2-tert.-butyl-5-methylphenol); 2,2'-methylene-bis(6-(1-methyl-cyclohexyl)para-cresol); n,n'-hexamethylene bis(3,5-di-tert. Butyl-4-hydroxy-hydrocinnamamide; 2,5,7,8-tetramethyl-2-(4',8',12'-trimethyltridecyl)chroman-6-ol; 2,2'-ethylidenebis(4,6-di-tert.-butylphenol);1,1,3-tris(2-methyl-4-hydrosy-5-tert.-butylphenyl)butane; 1,3,5-tris(4-tert.-butyl-3-hydroxy-2,6-dimethylbenzyl)-1,3,5-triazine-2,4- ,6-(1h,3h,5h)-trione; 3,9-bis(1,1-dimethyl-2-(beta-(3-tert.-butyl-4-hydroxy-5-methylphenyl)propionyloxy)ethyl)-2,4,8,10-tetraoxaspiro(5,5) undecane; 1,6-hexanediyl-bis(3,5-bis(1,1-dimethylethyl)-4-hydroxybenzene-propanoate); 2,6-di-tert.-butyl-4-nonylphenol; 3,5-di-tert.-butyl-4-hydroxyhydrocinnamic acid triester with 1,3,5-tris(2-hydroxyethyl)-s-triazine-2,4,6(1h,3h,5h)-trione; 4,4'-butylidenebis(6-tert.butyl-3-methylphenol); 2,2'-methylene bis(4-methyl-6-tert.-butylphenol); 2,2-bis(4-(2-(3,5-di-t-butyl-4-hydroxyhydrocinnamoyloxy))ethoxyphenyl))propane; triethyleneglycole-bis-(3-tert.-butyl-4-hydroxy-5methylphenyl)propionate; benzenepropanoic acid, 3,5-bis(1,1-dimethylethyl)-4-hydroxy-$c_{13-15}$-branched and linear alkyl esters; 6,6'-di-tert.-butyl-2,2'-thiodi-p-cresol; diethyl((3,5-bis(1,1-dimethylethyl)-4-hydroxyphenyl)methyl)

Phosphonate; 4,6-bis(octylthiomethyl)o-cresol; benzenepropanoic acid, 3,5-bis(1,1-dimethylethyl)4-hydroxy-$c_{7-9}$-branched and linear alkyl esters;1,1,3-tris[2-methyl-4-[3-(3,5-di-t-butyl-4-hydroxyphenyl)propionyloxy]-5-t-butylphenyl] butane; and a butylated reaction product of p-cresol and dicyclopentadiene.

Among those compounds, the following phenolic-type antioxidant compounds are especially preferred to be included in the polymers: pentaerythrityl-tetrakis(3-(3',5'-di-tert.-butyl-4-hydroxypheyl)-propionate; octadecyl 3-(3',5'-di-tert.-butyl-4-hydroxyphenyl)propionate; 1,3,5-trimethyl-2,4,6-tris-(3,5-di-tert.-butyl-4-hydroxyphenyl)benzene; 1,3,5-tris(3',5'-di-tert.-butyl-4'-hydroxybenzyl)isocyanurate, bis-(3,3-bis-(4'-hydroxy-3'-tert.-butylphenyl)butanoic acid)-glycolester; and 3,9-bis(1,1-dimethyl-2-(beta-(3-tert.-butyl-4-hydroxy-5-methylphenyl)propionyloxy)ethyl)-2,4,8,10-tetraoxaspiro(5,5)undecane.

Preferred organic phosphite/phosphonite antioxidants contain a phosphite moiety or a phosphonite moiety. Representative examples of preferred phosphite/phosphonite antioxidants include tris(2,4-di-t-butylphenyl)phosphite; tetrakis-(2,4-di-t-butylphenyl)-4,4'-biphenylen-di-phosphonite, bis(2,4-di-t-butylphenyl)-pentaerythrityl-di-phosphite; di-stearyl-pentaerythrityl-di-phosphite; tris-nonylphenyl phosphite; bis(2,6-di-t-butyl-4-methylphenyl)pentaerythrityl-di-phosphite; 2,2'-methylenebis(4,6-di-t-butylphenyl)octyl-phosphite; 1,1,3-tris(2-methyl-4-ditridecyl phosphite-5-t-butylphenyl)butane; 4,4'-butylidenebis(3-methyl-6-t-butylphenyl-di-tridecyl)phosphite; bis(2,4-dicumylphenyl)pentaerythritol diphosphite; bis(2-methyl-4,6-bis(1,1-dimethylethyl)phenyl)phosphorous acid ethylester; 2,2',2''-nitrilo triethyl-tris(3,3'5,5'-tetra-t-butyl-1,1'-biphenyl-2,2'-diyl)phosphite); phosphorous acid, cyclic butylethyl propandiol, 2,4,6-tri-t-butylphenyl ester; bis(2,4,6-tri-t-butylphenyl)-pentaerythrityl-di-phosphite; 2,2'-ethylidenebis(4,6-di-t-butylphenyl)fluorophosphonite, 6-(3-tert-butyl-4-hydroxy-5-methylphenyl)propoxy)-2,4,8,10-tetra-tert.but-yldibenz(d,t)(1.3.2)dioxaphosphepin; and tetrakis-(2,4-di-t-butyl-5-methyl-phenyl)-4,4'-biphenylen-di-phosphonite.

Among the above-mentioned compounds, the following phosphite/phosphonite antioxidant compounds are preferred to be included in the polymers: tetrakis-(2,4-di-t-butylphenyl)-4,4'-biphenylen-di-phosphonite; bis(2,6-di-t-butyl-.4-methylphenyl)pentaerythrityl-di-phosphite; di-stearyl-pentaerythrityl-diphosphite; and bis(2,4-dicumylphenyl)pentaerythritol diphosphite.

As antioxidant either a single compound or a mixture of compounds may be used. Particularly preferably the polymer comprises a sterically hindered phenolic compound and a phosphite/phosphonite compound.

The skilled man can readily determine an appropriate amount of antioxidant to include in the polymers. As discussed above, however, the polymers comprise less catalyst system residues than a film of the same density and MFR made with 1-butene and 1-hexene as comonomer, thus it is possible to add less antioxidant thereto (i. e. the polymer possess increased inherent stability). Thus a sterically hindered phenolic antioxidant may be used in an amount of 200-1000 ppmwt, more preferably 300-800 ppmwt, e. g. 400-600 ppmwt or about 500 ppmwt. The amount of organic phoshite/phosphonite antioxidant present in the polymer is preferably 50-500 ppmwt, more preferably 100-350 ppmwt and most preferably 150-250 ppmwt.

The above-mentioned antioxidants are particularly preferred when the amount of transition metal present in the polymer is sufficient to accelerate oxidation reactions, e. g. when the level of transition metal in the polymer is more than 1 $\mu$mol transition metal per kg polymer, more typically more than 2 $\mu$mol transition metal per kg polymer, e. g. more than 6 $\mu$mol transition metal per kg polymer. Such levels of transition metals may occur as the interpolymers are often prepared without a washing (e. g. deashing) step.

Further preferred polymers comprise a lubricant. Preferred lubricants include fatty acid salts (e. g. Ca or Mg stearate) and polymer processing aids (PPAs). A preferred PPA is a fluoropolymer, e. g. as available from Dyneon as FX 5922. The amount of lubricant present in the polymer is preferably 100-500 ppmwt, more preferably 300-450 ppmwt.

The polymer or polymer mix is preferably extruded and granulated into pellets, preferably after addivation. In this step, any extruder known in the art may be used, however, twin screw extruders are preferred. A preferred twin screw extruder is a counter rotating twin screw extruder. Preferably, the resulting pellets have a high bulk density, e. g. less than 10 %wt of the polymer is smaller than 2 mm in size.

Interpolymer production advantage

As discussed above, it is known that the mechanical performance of polymer films is improved by increasing the molecular weight of comonomer in the order propylene, butene, hexene and octene. The higher the molecular weight of the comonomer, however, the harder it is to produce the copolymer economically.

To obtain pure polymer, the non-incorporated comonomer residues therein should be low. The higher the molecular weight of the comonomer, however, the higher its solubility in the polymer at a given partial pressure. For

particle form polymerization processes (slurry and gas phase polymerization processes), the removal of non-incorporated monomer is typically done by counter current drying of the polymer powder with $N_2$, a process in which there is typically close to equilibrium between the comonomer in the gas and comonomer dissolved within the polymer phase. Thereafter an increase in the molecular weight of the comonomer makes the drying much more difficult and in practice, octene is not used in particle form polymerization for this reason. 1-hexene and 1-butene are therefore most commonly used, especially 1-butene, which can be stripped off relatively easily, i. e. with reasonable low feed of $N_2$ compared to the polymer flow, at a temperature somewhat below the lumping temperature of the polymer powder.

A further advantage of the films of the invention is therefore that they comprise 3-methyl-1-butene that is more volatile than hexene and octene and is therefore easier to strip from the polymer product, yet it yields films having much improved impact strength compared to 1-butene.

Interpolymer composition and properties

The amount of ethylene monomer present in the interpolymer is preferably 60 - 99.99 %wt, more preferably 70 - 99.9 %wt, still more preferably 80 - 99.5 %wt, e. g. 93 - 99.0 %wt.

The amount of 3-substituted $C_{4-10}$ alkene (e. g. 3-methyl-1-butene) monomer present in the interpolymer is preferably 0.01 to 40 %wt, more preferably 0.1 - 30 %wt, still more preferably 0.5 - 20 %wt, e. g. 0.5 - 6.5 %wt or less than 7 %wt.

When it is stated herein that the amount of a given monomer present in a polymer is a certain amount, it is to be understood that the monomer is present in the polymer in the form of a repeat unit. The skilled man can readily determine what is the repeat unit for any given monomer.

Preferably, the interpolymer has a crystallinity as measured by DSC of 10 - 90 %, more preferably 15-75 %, most preferably 25-70 %.

The density of the interpolymer is preferably in the range 890 - 950 kg/$m^3$, still more preferably in the range 910 - 940 kg/$m^3$, e. g. 920 - 930 kg/$m^3$.

The $MFR_2$ of the interpolymer is preferably in the range 0.01 - 2000 g/10 min, more preferably in the range 0.1 - 500 g/10 min, still more preferably 0.15 - 49 g/10 min, e. g. 0.5 - 5 g/10 min.

The $MFR_{21}$ of the interpolymer is preferably greater than 0.05 g/10 min, more preferably greater than 0.1 g/10 min, still more preferably greater than 1 g/10 min.

The melting temperature of the interpolymer is preferably in the range 100 - 140 °C, still more preferably in the range 110 - 130 °C, e. g. 115 - 125 °C.

The Mn of the interpolymer of the invention is preferably in the range 9000 - 250 000 g/mol, still more preferably in the range 15 000 - 150 000 g/mol, e. g. 25 000 - 70 000 g/mol.

The Mw of the interpolymer is preferably in the range 30 000 - 700 000 g/mol, still more preferably in the range 85 000 - 150 000 g/mol, e. g. 90 000 - 130 000 g/mol.

The Mw/Mn of the interpolymer is preferably in the range 1.5 - 50, more preferably in the range 2 - 30, e. g. 2 - 5.

Preferably, the interpolymer of the present invention is unimodal.

The interpolymer as hereinbefore described is also particularly suited for crosslinking compared to other single site or Ziegler Natta polymers made using conventional, linear alkenes as comonomers. Crosslinking may be carried out on the articles in their final geometric form, e. g. through the use of radicals, either by radiation, primarily gamma radiation or at high temperature by peroxides decomposition.

The polymer chains of the interpolymer may be linear in the sense that they have no measurable long chain branching. Alternatively, they may have some degree of long chain branching, which may be made e. g. by certain catalytic sites, especially metallocene such as CGC metallocenes which are often used in solution polymerization, or by polymerization with dienes or by post reactor modification, e. g. via radicals. If present, however, long chain branching is preferably introduced during polymerization without adding extra reactants, e. g. by using a mono-Cp metallocene as discussed above or metallocenes with two Cp rings (including indenyl and fluorenyl) and having a single bridge between the Cp rings to result in a relatively wide angle between the planes of the two Cp rings. Long chain branching gives useful rheological properties similar to broader molecular weight polymers (and thereby improved processing behavior) while in reality maintaining a relatively narrow molecular weight distribution, e. g. as measured by GPC.

The interpolymer is obtained with high purity. Thus the interpolymer contains only very low amounts of catalyst or catalyst system residues. Preferably, the amount of total catalyst system residue in the interpolymer, and therefore film, is less than 4000 ppm wt, still more preferably less than 2000 ppm wt, e. g. less than 1000 ppm wt. By the total catalyst system is meant the active site precursor, activator, carrier or other catalyst particle construction material and any other components of the catalyst system.

Transition metals are harmful in films in far lower concentrations than other impurities since they act as accelerators for degradation of the polymer by oxygen and temperature, giving discoloration and reducing or destroying mechanical properties. A particular advantage of the films of the present invention is that they contain very low amounts

of transition metal. The interpolymers, and therefore films, preferably comprise less than 100 μmol transition metal per kg polymer, more preferably less than 50 μmol transition metal per kg polymer, still more preferably less than 25 μmol transition metal per kg polymer, e. g. less than 15 μmol transition metal per kg polymer.

Film Preparation

Optional further polymer components and/or additives may be added to the polymer at the film extrusion stage, especially polymer processing aids, external lubricants and antiblocking agents. Preferably, further polymer components are added as is discussed in more detail below.

The films of the present invention may be monolayer or multilayer films. To form multilayer films, the interpolymer composition hereinbefore described may be coextruded, i. e. the interpolymer composition as hereinbefore described is fed into the film extrusion die with at least one other film material, each from a separate feed extruder, to make a multilayer film, containing two or more layers. After the extrusion process itself (whether to produce a monolayer or multilayer film), the film can be monoaxially or biaxially stretched to improve mechanical and optical properties.

The films of the present invention may be prepared by any conventional procedure, e. g. casting or blowing. Preferably, the films are prepared by blowing.

Alternatively, films may be prepared by lamination. Multilayer films may, for example, be prepared by lamination of a coextruded multilayer film.

Cast film

The films of the present invention may be prepared by using casting techniques, such as a chill roll casting process. For example, a composition comprising the interpolymer hereinbefore described can be extruded in a molten state through a flat die and then cooled to form a film. The skilled man is aware of typical casting conditions. Typically, however, extrusion is carried out at a temperature in the range 150 to 350 °C, the die gap is in the range 500 - 1300 μm and the draw down ratio is in the range 50 - 200. Cooling is preferably carried out at a temperature of 0 - 35 °C.

As a specific example, cast films can be prepared using a pilot scale commercial cast film line machine as follows. Pellets of the interpolymer composition are melted at a temperature ranging from about 200 to 260 °C, with the specific melt temperature being chosen to match the melt viscosity of the particular polymers. In the case of a multilayer cast film, the two or more different melts are conveyed to a co-extrusion adapter that combines the two or more melt flows into a multilayer, coextruded structure. This layered flow is distributed through a single manifold film extrusion die to the desired width. The die gap opening is typically about 600 μm. The material is then drawn down to the final gauge. The material draw down ratio is typically about 21:1 for 40 μm films. A vacuum box or air knife may then be used to pin the melt exiting the die opening to a primary chill roll maintained at about 32 °C. The resulting polymer film is collected on a winder. The film thickness may be monitored by a gauge monitor and the film may be edge trimmed by a trimmer. One or more optional treaters can be used to surface treat the film, if desired.

A chill roll casting process and apparatus that can be used to form a film of the present invention suitably modified in accordance with the above-described processing parameters is in The Wiley Encyclopedia of Packaging Technology, Second Edition, A. L. Brody and K. S. Marsh, Ed., John Wiley and Sons, Inc., New York (1997).

Although chill roll casting is one example, other forms of casting can be used.

Blown film

The films of the invention are preferably prepared by blowing according to procedures well known in the art. Thus the film may be produced by extrusion

through an annular die and blowing (e. g. with air) into a tubular film by forming a bubble which is collapsed between nip rollers after solidification. The film can then be slit, cut or converted (e. g. sealed) as required. Conventional film production techniques may be used in this regard.

The skilled man is aware of typical blowing conditions. Typically, however, extrusion is carried out at a temperature in the range 160 to 240 °C and cooled by blowing gas (e. g. air) at a temperature of 10 to 50 °C to provide a frost line height of up to 10 times, typically 2 to 8 times the diameter of the die. The blow up ratio should generally be in the range 2 to 5, preferably 2.5 to 4.

As a specific example, blown films can be prepared as follows. The interpolymer composition hereinbefore described is introduced into a feed hopper of an extruder, such as a 63.5 mm Egan extruder that is water-cooled, resistance heated, and has an L/D ratio of 24:1. The film can be produced using a 15.24 cm Sano die with a 2.24 mm die gap, along with a Sano dual orifice non-rotating, non-adjustable air ring. The film is extruded through the die into a film that is cooled by blowing air onto the surface of the film. The film is drawn from the die typically forming a cylindrical film that is cooled, collapsed and optionally subjected to a desired auxiliary process, such as slitting, treating, sealing

and/or printing. The finished film can be wound into rolls for later processing or can be fed into a bag machine and converted into bags.

Apparatus for making a blown film according to the present invention is available from e. g. Windmöller & Hölscher and from Alpine. Of course, other blown film forming equipment and corresponding methods can also be used.

Film Structure and Composition

The product from the film forming process may be a monolayer film or a film comprising two or more layers (i. e. a multilayer film). In a multilayer film, the polymer composition of one layer is typically different from that of adjacent layers, e. g. it comprises different components or the same components in different ratios.

In the case of monolayer films, they may consist of the above-described interpolymer composition, i. e. it may not comprise any other polyalkene component. Alternatively, the interpolymer composition may be blended with one or more polymer components.

In the case of a multilayer film, one or more of its layers may consist of the above-described interpolymer composition, i. e. said layer may not comprise any other polyalkene component. Alternatively, the interpolymer composition may be blended with one or more polymer components.

Other polymer components

The films (monolayer and multilayer) of the present invention may therefore comprise one or more polyalkene components. According to the invention the film comprises a low density polyethylene (LDPE). In the case of a multilayer film, the LDPE may be present in one or more (e. g. all) of its layers.

LDPE is prepared using a well known high pressure radical process using a radical generating compound such as peroxide. The skilled polymer chemist appreciates that LDPE is a term of the art. Both LDPE made in tubular and in autoclave reactors may be used, including its copolymers, e. g. ethylene vinyl acrylate (EVA), ethylene methyl acrylate (EMA), ethylene butyl acrylate (EBA) and ethylene ethyl acrylate (EEA) copolymers.

The LDPE present in the films (monolayer and multilayer) of the present invention preferably has a density in the range 915 - 937 kg/$m^3$, still more preferably 918 - 930 kg/$m^3$, e. g. 920 - 924 kg/$m^3$.

The LDPE present in the films (monolayer and multilayer) of the present invention preferably has a $MFR_2$ in the range 0.2 - 4 g/10 min, still more preferably 0.5 - 2 g/10 min, e. g. 0.7 - 1.0 g/10 min.

The amount of LDPE present in a monolayer film of the invention may be 2 to 60 %wt, more preferably 3 to 50 % wt, still more preferably 4 - 25 %wt, e. g. 6 - 15 %wt.

In the case of multilayer films, the amount of LDPE present in any given layer may be 2 to 60 %wt, more preferably 3 to 50 % wt, still more preferably 4 - 25 %wt, e. g. 6 - 15 %wt.

Further Additives

The films (monolayer and multilayer) of the present invention may additionally comprise conventional additives such as antioxidants, antiblocking agents, color masterbatches, antistatics, slip agents (external lubricants), fillers, UV absorbers, internal lubricants, acid neutralizers, fluoroelastomer and other polymer processing aids (PPA), UV stabilizers, acid scavengers, nucleating agents, etc. In the case of a multilayer film, the additives may be present in one or more (e. g. all) of its layers.

Preferred films may comprise external lubricants (slip agents), e. g. erucamide or oleamide, to decrease film friction. External lubricant should preferably be present in an amount of 300 - 1500 ppmwt.

Film Thickness

In the case of a multilayer film, each film layer may have a thickness of, e. g. 2 - 200 μm, preferably 5 - 70 μm, more preferably 15 - 40 μm e. g. 20 - 35 μm.

The total thickness of the film (monolayer or multilayer) is not critical and depends on the end use. Thus films may have a thickness of, e. g. 10 - 300 μm, preferably 15 - 150 μm, more preferably 20 - 70 μm, e. g. 30 -60 μm.

Film Properties

The films of the invention have a desirable balance of properties, in particular excellent optical properties and mechanical properties. More specifically the films of the present invention exhibit low haze, high gloss, high dart impact and high puncture resistance strength and energy.

The films of the invention exhibit low haze. According to the invention, haze (ASTM D 1003) is less than 12 %,

preferably less than 10%, still more preferably less than 8%, e. g. less than 6%. The lower limit of haze is not critical and may be, e. g. 1 %. In particular for a 40 μm blown film comprising 90 %wt interpolymer as hereinbefore described and 10 %wt LDPE (density 923 g/dm$^3$, MFR$_2$ 0.7 g/10 min), and particularly in the case of a film prepared according to example 2 below, haze (ASTM D 1003) may be less than 12 %, preferably less than 10 %, still more preferably less than 6 %, e. g. less than 5%.

Particularly preferred films (e. g. 40 μm thick) of the invention satisfy the following equation:

$$Haze < A + 0.09 \cdot (Stiffness - 200)$$

wherein haze is measured according to ASTM D 1003 and given in %, stiffness is the average of the secant modulus in the machine and transverse direction and is measured according to ASTM D 882-A and given in MPa and A is 3. In particularly preferred films, A is 4.5, more 5, e. g. 5.4

The films of the invention exhibit high gloss. Gloss (ASTM D 2457) may be greater than 80 %, preferably greater than 90 %, still more preferably greater than 100 %, e. g. greater than 110 %. The upper limit of gloss is not critical and may be, e. g. 120 %. In particular for a 40 μm blown film comprising 90 %wt interpolymer as hereinbefore described and 10 %wt LDPE (density 923 g/dm$^3$, MFR$_2$ 0.7 g/10 min), and particularly in the case of a film prepared according to example 2 below, gloss (ASTM D 2457) may be greater than 70 %, preferably greater than 80 %, still more preferably greater than 90 %, e. g. greater than 95 %.

Particularly preferred films (e. g. 40 μm thick) of the invention satisfy the following equation:

$$Gloss > B - 0.35 \cdot (Stiffness - 200)$$

wherein gloss is measured according to ASTM D 2457 and given in %, stiffness is the average of the secant modulus in the machine and transverse direction and is measured according to ASTM D 882-A and given in MPa and B is 120. In particularly preferred films, B is 125, e. g. 130.

The films of the invention exhibit excellent dart impact strength. Dart drop (ISO 7765/1) may be at least 3.75 g/μm, preferably at least 5 g/μm, still more preferably at least 6.25 g/μm, e. g. at least 7.5 g/μm. The upper limit of dart drop is not critical and may be, e. g. 12.5 g/μm. In particular for a 40 μm blown film comprising 90 %wt interpolymer as hereinbefore described and 10 %wt LDPE (density 923 g/dm$^3$, MFR$_2$ 0.7 g/10 min), and particularly in the case of a film prepared according to example 2 below, dart drop (ISO 7765/1) is preferably at least 2.5 g/μm, preferably at least 3.75 g/μm, still more preferably at least 5 g/μm, e. g. at least 6.25 g/μm.

Particularly preferred films (e. g. 40 μm thick) of the invention satisfy the following equation:

$$Dart_drop > C \cdot Thickness \cdot \left(\frac{Stiffness}{200}\right)^{-3.3}$$

wherein dart drop is measured according to ISO 7765/1 and given in grams, thickness of the film is given in μm, stiffness is the average of the secant modulus in the machine and transverse direction and is measured according to ASTM D 882-A and is given in MPa and C is 8. In particularly preferred films, C is 10, e. g. 13.

The films of the invention exhibit excellent puncture resistance. Puncture resistance strength (ASTM D5748) according to the invention is at least 1.75 N/μm, preferably at least 2.25 N/μm, still more preferably at least 2.75 N/μm, e. g. at least 2.9 N/μm. The upper limit of puncture resistance strength is not critical and may be, e. g. 3.0 N/μm. In particular for a 40 μm blown film comprising 90 %wt interpolymer as hereinbefore described and 10 %wt LDPE (density 923 g/dm$^3$, MFR$_2$ 0.7 g/10 min), and particularly in the case of a film prepared according to example 2 below, puncture resistance strength (ASTM D5748) is preferably at least 1.25 N/μm, preferably at least 1.75 N/μm, still more preferably at least 2.25 N/μm, e. g. at least 2.5 N/μm.

Particularly preferred films (e. g. 40 μm thick) of the invention satisfy the following equation:

$$Puncture_strength > Thickness \cdot \left(D - 0.015 \cdot (Stiffness - 200)\right)$$

wherein puncture strength is measured according to ASTM D5748 and given in N, thickness of the film is given in μm, stiffness is the average of the secant modulus in the machine and transverse direction and is measured according to

ASTM D 882-A and is given in MPa and D is 2.5. In particularly preferred films, D is 2.7, e. g. 3.

Puncture resistance energy (ASTM D5748) may be at least 0.35 J/$\mu$m, preferably at least 0.30 J/$\mu$m, still more preferably at least 0.37 J/$\mu$m, e. g. at least 0.55 J/$\mu$m or at least 0.60 J/$\mu$m. The upper limit of puncture resistance energy is not critical and may be, e. g. 0.65 J/$\mu$m. In particular for a 40 $\mu$m blown film comprising 90 %wt interpolymer as hereinbefore described and 10 %wt LDPE (density 923 g/dm$^3$, $MFR_2$ 0.7 g/10 min), and particularly in the case of a film prepared according to example 2 below, puncture resistance energy (ASTM D5748) is preferably at least 0.25 J/$\mu$m, preferably at least 0.35 J/$\mu$m, still more preferably at least 0.45 J/$\mu$m, e. g. at least 0.50 J/$\mu$m.

The films of the invention additionally exhibit high tensile modulus properties (0.05-1.05%, elongation secant modulus, ASTM D 882-A) in the machine and transverse directions. These are preferably 200 - 310 MPa, more preferably 220 - 280 MPa, e. g. 240 - 270 MPa, particularly for a 40 $\mu$m blown film comprising 90 %wt interpolymer as hereinbefore described and 10 %wt LDPE (density 923 g/dm$^3$, $MFR_2$ 0.7 g/10 min), and especially in the case of a film prepared according to example 2 below.

The films of the invention also preferably have a high strain at break in both machine and transverse directions, e. g. at least 500 % in either direction (MD/TD), more preferably at least 680 % in either direction (MD/TD), particularly for a 40 $\mu$m blown film comprising 90 %wt interpolymer as hereinbefore described and 10 %wt LDPE (density 923 g/dm$^3$, $MFR_2$ 0.7 g/10 min), and especially in the case of a film prepared according to example 2 below.

Additionally the films of the invention also preferably have a high tensile strength in both machine and transverse directions, e. g. at least 43 MPa in either direction (MD/TD), particularly for a 40 $\mu$m blown film comprising 90 %wt interpolymer as hereinbefore described and 10 %wt LDPE (density 923 g/dm$^3$, $MFR_2$ 0.7 g/10 min), and especially in the case of a film prepared according to example 2 below.

Film Applications

The films of the present invention may be used as industrial films, e. g. as industrial packaging films and as non packaging industrial films. Examples of industrial packaging films include, for example, shipping sacks e. g. heavy duty shipping sacks (HDSS), stretch hoods, stretch wraps, liners and industrial shrink film. Examples of non packaging industrial films include, for example, building and constructing films (e. g. air and moisture membranes, barrier films and geomembranes), agricultural films, protection films and technical films.

Preferably, the films of the invention are used in packaging. Heavy duty shipping sacks may, for example, be used for packaging sand, cement, stones, compost, polymer pellets etc.

Industrial films

The film used for the production of industrial film may be a monolayer film. In this case, the $MFR_2$ of the interpolymer composition from which it is formed is preferably 0.2 -3 g/10 min, more preferably 0.4 - 2.5 g/10 min and still more preferably 0.5 - 2 g/10 min. The density of the interpolymer composition is preferably 900 - 930 g/dm$^3$, more preferably 905 - 925 g/dm$^3$ and more preferably 910 - 923 g/dm$^3$.

More preferably, however, the film used for the production of industrial film is a multilayer film, preferably obtained by coextrusion. By utilizing more than one layer, the properties of the overall film may be optimized to a greater extent than with a single layer (monolayer) structure. This means that the film can be made thinner without sacrificing important properties.

A preferred multilayer film for use in industrial film has the structure aba wherein:

(a): outer layer
(b): core layer or core layers (b1b2b3)
(a): outer layer

Layers (a) preferably comprises 10 - 100 %wt of the interpolymer composition hereinbefore described, more preferably 50 - 100 %wt and still more preferably 70 - 95 % wt. Still more preferably at least one of the layers (a) and more preferably both additionally comprise 3 - 30 %wt, more preferably 5 - 20 %wt LDPE as hereinbefore described. Preferably, the LDPE component has a density of 880 - 930 kg/dm$^3$ and a $MFR_{21}/MFR_2$ greater than 30.

The interpolymer as hereinbefore described that is present in the layers (a) preferably has a $MFR_2$ of 0.2 -3 g/10 min, more preferably 0.5 - 2 g/10 min and still more preferably 0.7- 1.5 g/10 min. The density of the interpolymer is preferably 890 - 935 g/dm$^3$, more preferably 900 -930 g/dm$^3$ and still more preferably 910 - 923 g/dm$^3$.

A LDPE polymer optionally present in layers (a) preferably has a $MFR_2$ of 0.2 -3 g/10 min, more preferably 0.5 - 2 g/10 min and still more preferably 0.7- 1.5 g/10 min. The density of the LDPE is preferably 905 - 930 g/dm$^3$, more preferably 910 - 926 g/dm$^3$ and still more preferably 917 -924 g/dm$^3$.

The polymer composition of the layers (a) preferably has a $MFR_2$ of 0.2 -3 g/10 min, more preferably 0.5 - 2

g/10 min and still more preferably 0.7- 1.5 g/10 min. The density of the polymer composition of the layers (a) is preferably 890 - 935 g/dm$^3$, more preferably 900 -930 g/dm$^3$, still more preferably 910 - 923 g/dm$^3$.

Layers (a) may optionally contain further polymer components.

The layers (a) may have the same or different compositions, but it is preferred if the layers (a) have the same composition.

One or both of layers (a) may be used for printing. Layer(s) (a) preferably has good sealing properties.

Layer (b) may be any polymer that can be formed into a film. It may function e. g. to provide mechanical properties (impact strength and stiffness) or barrier properties. It may consist of several layers, e. g. 3, 5, 7 or 9 layers.

The following polymers are especially well suited for inclusion in layer (b): polyethyleneterephtalate (PET), polyamides (PA), ethylene vinyl alcohol (EVOH), polypropylene (including oriented polypropylene (OPP) and biaxially oriented polypropylene (BOPP)) and polyethylene (included oriented polyethylene (OPE)).

The layer(s) (b) may also comprise a polyethylene, particularly a polyethylene interpolymer as hereinbefore described. The interpolymer composition present in this layer preferably has a $MFR_2$ of 0.1 - 4 g/dm$^3$, more preferably 0.3 to 2 g/10 min, and still more preferably 0.2 to 1.5 g/10 min. The density of the interpolymer composition is preferably 900 g/dm$^3$ to 950 g/dm$^3$, more preferably 910 to 940 g/dm$^3$ and still more preferably 915 - 935 g/dm$^3$. Preferably, the interpolymer composition present in layer(s) (b) has a lower $MFR_2$ and a lower density than the average of the polyethylene polymer present in the layer.

The total thickness of the film of this embodiment (i. e. an industrial film) is preferably 15 - 300 μm, more preferably 25 - 250 μm, still more preferably 40 - 200 μm.

If the film has 3 or more layers, then preferably layers (a) should each be 5 - 30 % of the total thickness of the multilayer film, and layer or layers (b) totally 25 - 90 % of the total thickness. Thus the thickness of each layer (a) is preferably 10-30 μm. The thickness of layer (b) is preferably 25-60 μm.

Laminates

The film of the invention may also be incorporated into a laminate. In the process of lamination a film is adhered to a substrate. The film that is used in the lamination process is herein referred to as a lamination film. The resulting product is referred to herein as a laminate.

Lamination Film

The lamination film may be a monolayer film or a multilayer film. Preferably, the lamination film is a multilayer film, preferably formed by coextrusion.

The lamination film may, for example, have a coextruded layer structure AC:

A outer layer; and
C inner layer,

wherein the inner layer is adjacent to the substrate.

More preferably the lamination film may have a coextruded structure ABC: A outer layer;

B core layer;
C inner layer,

wherein the inner layer is adjacent to the substrate.

The inner layer C preferably comprises 10 - 100 %wt of the interpolymer composition hereinbefore described, more preferably 50 - 100 %wt and most preferably 70 - 95 % wt. Still more preferably the inner layer C additionally comprises 3 - 30 %wt, more preferably 5 - 20 %wt LDPE as hereinbefore described. Preferably, the LDPE component has a density of 880 - 930 kg/dm$^3$ and a $MFR_{21}/MFR_2$ greater than 30. The inclusion of such a component typically improves the processability of the polymer composition.

The interpolymer as hereinbefore described that is present in the inner layer C preferably has a $MFR_2$ of 0.2 -3 g/10 min, more preferably 0.5 - 2 g/10 min and still more preferably 0.7- 1.5 g/10 min. The density of the interpolymer is preferably 890 - 935 g/dm$^3$, more preferably 900 -930 g/dm$^3$ and still more preferably 910 - 923 g/dm$^3$.

A LDPE polymer optionally present in inner layer C preferably has a $MFR_2$ of 0.2 -3 g/10 min, more preferably 0.5 - 2 g/10 min and still more preferably 0.7- 1.5 g/10 min. The density of the LDPE is preferably 905 - 930 g/dm$^3$, more preferably 910 - 926 g/dm$^3$ and still more preferably 917 -924 g/dm$^3$.

The polymer composition of the inner layer C preferably has a $MFR_2$ of 0.2 -3 g/10 min, more preferably 0.5 - 2 g/10 min and still more preferably 0.7- 1.5 g/10 min. The density of the polymer composition of the inner layer C is

preferably 890 - 935 g/dm$^3$, more preferably 900 -930 g/dm$^3$, still more preferably 910 - 923 g/dm$^3$.

Layer C may optionally contain further polymer components.

The outer layer A preferably has good sealing properties since this side of the laminate is typically subjected to a sealing process, e. g. in the production of pouches and bags. Preferably, outer layer A also has good optical properties, namely haze and gloss, especially gloss. Optionally, there is an additional substrate on top of layer A, but preferably, A is a free surface.

In AC lamination films, the layers A and C must be different. In ABC lamination films, preferably outer layer A is identical to inner layer C. Thus preferred features of layer C are also preferred features of layer A. A preferred lamination film structure is therefore ABA.

The core layer B may be any polymer that can be formed into a film. It may function e. g. to provide mechanical properties (rupture properties and stiffness) and barrier properties (oxygen, water, flavor). It may consist of several layers.

The following polymers are especially well suited for inclusion in layer B: polyethyleneterephtalate (PET), polyamides (PA), ethylene vinyl alcohol (EVOH), polypropylene (including oriented polypropylene (OPP) and biaxially oriented polypropylene (BOPP)) and polyethylene (included oriented polyethylene (OPE).

If the core layer B consists of more than one layer, it preferably consists of 3, 5, 7 or 9 layers. In such a case, the layers preferably are symmetric so that in a 3 layer composition B1B2B3, layers B1 and B3 are identical.

The total thickness of the lamination film is preferably 10 - 150 μm, more preferably 15-90 μm and still more preferably 20 - 70 μm.

If the film has 3 or more layers, then preferably layer A and C should each be 5 - 30 % of the total thickness of the multilayer film, and layer or layers B totally 25 - 90 % of the total thickness. Thus the thickness of layers A and C is preferably 10-30 μm. The thickness of layer B is preferably 25-60 μm.

If the film has 2 layers A and B, then preferably each layer should be 10 - 90 % of the total thickness of the film, more preferably 20 - 80 % and most preferably 30 - 70 %. Thus the thickness of layer A is preferably 20-60 μm. The thickness of layer B is preferably 50-120 μm.

Substrate

The substrate used in the preparation of the laminate preferably comprises polyethyleneterephtalate (PET), polyamides (PA), ethylene vinyl alcohol (EVOH), polypropylene, polyethylene, metal, especially aluminium, paper or cardboard. The substrate may also comprise more than one layer, e. g. metalized (aluminized) polymer, or aluminium foil coated with polyethylene. The thickness of the substrate is preferably 3 -100 μm, more preferably 4 - 50 μm, still more preferably 5 - 30 μm.

Print may optionally be applied on the surface of the lamination film, preferably to a layer A therein, before the lamination process. Alternatively, print may be applied to the surface of the substrate. In the latter case the print is protected from mechanical influence and from solvent/chemical action by the lamination film, but is still visible through a transparent lamination film.

Laminate and lamination

The lamination film is preferably laminated onto the substrate after the lamination film has been formed. Lamination film may optionally be adhered to both sides of a substrate.

Lamination may be carried out by a continuous process where lamination film(s) and substrate are pressed against each other at elevated temperature. Typical temperatures used may be 150-300 °C. Neither the lamination film nor the substrate melts during the lamination process. Often, in addition to the layers previously mentioned, a layer (e. g. 0.5 - 5 μm thick) of adhesive is applied to the surface of at least one of the surfaces to be laminated together. Suitable equipment for lamination can be bought from Windmöller & Hölscher and from Macchi.

The laminates of the invention have a wide variety of applications but are of particular interest in packaging of food and drink as well as packaging of consumer and industrial goods. In food packaging the laminates of the invention may, for example, be used for the packaging of pasta, milk powder, snack food, coffee bags, margarine and frozen food. In consumer goods packaging, the laminates of the invention may be used for packaging detergent powder and toothpaste as well for the manufacture of stand-up pouches for, e. g. for pet food, beverages etc.

Having generally described this invention, a further understanding can be obtained by reference to certain specific.

EXAMPLES

The invention will now be described with reference to the following examples wherein:

Figure 1 shows dart drop (film impact strength) plotted versus film stiffness.
Figures 2 shows puncture strength plotted versus film stiffness.
Figures 3 and 4 show haze and gloss plotted against film stiffness.
Figure 5 shows minimum fusion temperature plotted against film stiffness.

The stiffness in these plots is the average value of the secant modulus of the film in machine (MD) and transverse (TD) direction.

Determination Methods

Polymers

Unless otherwise stated, the following parameters were measured on polymer samples as indicated in the Tables below.

$MFR_2$, $MFR_5$ and $MFR_{21}$ were measured according to ISO 1133 at loads of 2.16, 5.0, and 21.6 kg respectively. The measurements were at 190 °C for polyethylene interpolymers and at 230 °C for polypropylene interpolymers.

Molecular weights and molecular weight distribution, Mn, Mw and MWD were measured by Gel Permeation Chromatography (GPC) according to the following method: The weight average molecular weight Mw and the molecular weight distribution (MWD = Mw/Mn wherein Mn is the number average molecular weight and Mw is the weight average molecular weight) is measured by a method based on ISO 16014-4:2003. A Waters 150CV plus instrument, equipped with refractive index detector and online viscosimeter was used with 3 x HT6E styragel columns from Waters (styrene-divinylbenzene) and 1,2,4-trichlorobenzene (TCB, stabilized with 250 mg/L 2,6-Di tert butyl-4-methyl-phenol) as solvent at 140 °C and at a constant flow rate of 1 mL/min. 500 μl of sample solution were injected per analysis. The column set was calibrated using universal calibration (according to ISO 16014-2:2003) with 15 narrow molecular weight distribution polystyrene (PS) standards in the range of 1.0 kg/mol to 12 000 kg/mol. These standards were from Polymer Labs and had Mw/Mn from 1.02 to 1.10. Mark Houwink constants were used for polystyrene and polyethylene (K:9.54 x $10^{-5}$ dL/g and a: 0.725 for PS and K: 3.92 x $10^{-4}$ dL/g and a: 0.725 for PE). All samples were prepared by dissolving 0.5-3.5 mg of polymer in 4 mL (at 140 °C) of stabilized TCB (same as mobile phase) and keeping for 3 hours at 140 °C and for another 1 hour at 160 °C with occasional shaking prior to sampling into the GPC instrument.

Melting temperature was measured according to ISO 11357-1 on Perkin Elmer DSC-7 differential scanning calorimetry. Heating curves were taken from -10 °C to 200 °C at 10 °C/min. Hold for 10 min at 200 °C. Cooling curves were taken from 200 °C to -10 °C at 10 °C per min. Melting temperature was taken as the peak of the endotherm of the second heating. The degree of crystallinity was calculated by dividing the observed melting peak with the heat of melting of a perfectly crystalline polyethylene, i. e. 290 J/g.

Comonomer content (wt %) was determined based on Fourier transform infrared spectroscopy (FTIR) determination calibrated with C13-NMR.

Density of materials is measured according to ISO 1183:1987 (E), method D, with isopropanol-water as gradient liquid. The cooling rate of the plaques when crystallizing the samples was 15 C/min. Conditioning time was 16 hours.

Rheology of the polymers was determined by frequency sweep at 190 °C under nitrogen atmosphere according to ISO 6721-10, using Rheometrics RDA II Dynamic Rheometer with parallel plate geometry, 25 mm diameter plate and 1.2 mm gap. The measurements gave storage modulus (G'), loss modulus (G") and complex modulus (G*) together with the complex viscosity (η*), all as a function of frequency (ω). These parameters are related as follows: For any frequency ω: The complex modulus: $G^* = (G'^2 + G''^2)^{1/2}$. The complex viscosity: η* = G*/□ ω. The denomination used for modulus is Pa (or kPa) and for viscosity Pa s and frequency (1/s). η*0.05 is the complex viscosity at a frequency of 0.05 $s^{-1}$ and $\eta^*_{300}$ is the complex viscosity at 300 $s^{-1}$.

According to the empirical Cox-Merz rule, for a given polymer and temperature, the complex viscosity as function of frequency measured by this dynamic method is the same as the viscosity as a function of shear rate for steady state flow (e. g. a capillary).

The activity coefficient for the bench scale polymerization runs is calculated by the following equation:

$$Activity_coefficient(kg/(g,bar,h) = \frac{(Yield_of_polymer_(kg))}{(Catalyst_amount_(g)) \cdot (Partial_pressure_of_ethylene_(bar)) \cdot (Polymerisation_time-(h))}$$

For continuous polymerizations, the activity coefficient is analogous by using production rate of polymer instead of yield of product and feed rate of catalyst system instead of amount fed catalyst, and using the average residence time in the continuous reactor.

Films

Unless otherwise stated, the following parameters were measured on 40 μm thick films prepared as described in the examples.

Dart drop: ISO 7765/1.
Haze: ASTM D 1003.
Gloss: ASTM D 2457. Measured at light angle of 60°.

Minimum fusion temperature (sealing property): Minimum fusion temperature (cold sealing) of film was measured using a CeraTek welding equipment. Film is welded in 8 welding zones with 5 °C differences between zones for 1 second at 2 bar pressure. After cooling, films are cut in 15 mm breadth and weld manually pulled apart. Minimum fusion temperature is the minimum temperature at which weld survives until the film itself stretches.

Puncture resistance: ASTM D5748.
Secant modulus: Measurement according to ASTM D 882-A, and calculated from the values at 0.05 and 1.05 % elongation.
Tensile strain and tensile strength ISO 527-3.

Examples

Example 1

Raw materials

The catalyst system ((n-Bu-Cp)$_2$ $HfCl_2$ and MAO supported on calcined silica) was prepared essentially according to example 1 of WO 98/02246, except Hf was used as transition metal instead of Zr and 600 °C was used as dehydration temperature.

Ethylene: Polymerization grade
Hydrogen: Grade 6.0
1-hexene: From Sasol. Stripped of volatiles and dried with 13 X molecular sieve.
1-octene: Polymerization grade (99.5 %). $N_2$ bubbled and dried with 13 X molecular sieve.
3-methyl-1-butene: Produced by Evonik Oxeno. Purity > 99.7%. Dried with 13 X molecular sieve and stripped of volatiles.
Isobutane: Polymerization grade

Slurry Polymerization method

Polymerization was carried out in an 8 liter reactor fitted with a stirrer and a temperature control system. The same comonomer feeding system was used for all runs. The procedure consisted of the following steps:

1. Catalyst system was fed into the reactor.
2. 3.8 liter isobutane was added to the reactor and stirring started (300 rpm).
3. The reactor was heated to a polymerization temperature of 85 °C.
4. Ethylene, comonomer and hydrogen were added into the reactor. The pressure was maintained at the required pressure by the supply of ethylene via a pressure control valve. Hydrogen had been previously mixed with ethylene in the ethylene supply cylinder. Comonomer was also added continuously into the reactor, proportional to the ethylene flow.
5. The consumption of monomer was followed. When 1500 - 2000 g polymer had been produced, the polymerization was stopped by venting the reactor of volatiles and reducing the temperature.
6. The polymer was further dried in a vacuum oven.

Further details of the polymerization procedure and details of the resulting interpolymers are provided in Table 1 below.

Preparation of Polymer Pellets

Polymer powders were mixed with antioxidant, 1500 ppm Irganox B561 from Ciba (contains 20 wt % Irgafos 168 (Tris (2,4-di-t-butylphenyl) phosphite) and 80 wt % Irganox 1010 (Pentaerythrityl-tetrakis(3-(3',5'-di-tert. butyl-4-hydroxyphenyl)-propionate)). The mix was inerted by $N_2$ and maintained under $N_2$ at feed end during pelletization by a Prism 16 twin screw extruder at 200 °C extruder temperature.

Preparation of Polymer Films

Pellets were blown into film on a Collin monolayer film line with screw diameter 25 mm, length/diameter ratio of 25, die diameter 50 mm and with die gap adjusted to 1.5 mm. The polymers were run at a screw speed of 60 rpm, take off speed 2.0 m/min, melt temperature 190 °C and blow up ratio (BUR) of 3.5. The film thickness was adjusted to approximately 40 μm.

Results

The polymerization results, analytical values as well as the results of the film testing are given in table 1.

Table 1.

| Run | | 1 | 2 | 3 | 4 |
|---|---|---|---|---|---|
| POLYMERIZATION | | | | | |
| Catalyst feed | g | 1.64 | 1.66 | 2.38 | 2.34 |
| Comonomer type* | - | MIB | MIB | 1-hexene | 1-octene |
| Comonomer start (as batch) | ml | 25 | 100 | 50 | 60 |
| Comonomer continuous addition feed ratio | g/g 100 g ethylene | 28 | 25 | 10 | 11 |
| Run time | min | 47 | 44 | 68 | 76 |
| Yield | g | 1760 | 1790 | 1680 | 1800 |
| Catalyst activity | g PE/(g cat.,h, bar) | 326 | 350 | 148 | 145 |
| Catalyst residue # | g catalyst/kg PE | 0.93 | 0.93 | 1.42 | 1.30 |
| Transition metal residue # | μmol/kg PE | 19 | 19 | 28 | 26 |
| | | | | | |
| ANALYSES POWDER | | | | | |
| $MFR_2$ | g/10 min | 1.5 | 1.2 | 1.5 | 1.6 |
| $\eta^*$ (0,05 $s^{-1}$) | Pa s | 4770 | 5645 | 4 160 | 4092 |
| $\eta^*$ (300$s^{-1}$) | Pa s | 1 203 | 1 252 | 1 064 | 1 032 |
| $M_w$ | g/mol | 105 000 | 105 000 | 95000 | 95000 |
| $M_n$ | g/mol | 47 000 | 50 000 | 44 000 | 42 000 |
| $M_w/M_n$ | - | 2.2 | 2.1 | 2.2 | 2.3 |
| Melting temperature | °C | 117.4 | 118.2 | 116.8 | 119.6 |
| Comon. content (FT-IR/NMR) | wt% | 6 | 5.5 | 5.3 | 6.6 |
| Density | kg/dm3 | 918.5 | 919.0 | 919.0 | 920.8 |
| | | | | | |
| ANALYSES OF PELLETS | | | | | |
| $MFR_2$ | g/10 min | 1.4 | 1.1 | 1.5 | 1.5 |
| Density | kg/$dm^3$ | 920.3 | 921.3 | 921.5 | 922.1 |
| | | | | | |

(continued)

| Run | | 1 | 2 | 3 | 4 |
|---|---|---|---|---|---|
| FILM TESTING ¤ | | | | | |
| General | | | | | |
| - Film thickness range obtained | μm | 38-47 | 38-49 | 38-54 | 38-50 |
| - Dart drop | g | 450 | 340 | 350 | 560 |
| - Haze | % | 41.3 | 48.9 | 54.2 | 58.2 |
| - Gloss | % | 33 | 33 | 22 | 18 |
| Tensile tests transverse direction (TD) | | | | | |
| - Secant modulus | MPa | 185 | 205 | 200 | 205 |
| - Tensile stress at yield | MPa | 11.8 | □□□□□ | 11.8 | 11.7 |
| - Tensile strain at yield | % | 15 | 15 | 14.0 | 12.8 |
| Tensile tests machine direction (MD) | | | | | |
| - Secant modulus | MPa | 185 | 200 | 190 | 205 |
| - Tensile stress at yield | MPa | 12.0 | 12.4 | 11.6 | 11.5 |
| - Tensile strain at yield | % | 15 | 15 | 15 | 14.9 |
| ¤ Film testing was performed on films of thickness of about 40 micrometer.<br># Calculated from measured yield.<br>* MIB: 3-methyl-1-butene | | | | | |

Surprisingly, the optical properties of film are improved by using 3-methyl-1-butene as comonomer versus those monomers conventionally used, namely linear alkenes 1-hexene and 1-butene. Specifically gloss is increased and haze is decreased compared to both of the linear alkene polymers, in spite of 1-butene having a lower and 1-hexene a higher molecular weight than the 3-methyl-1-butene comonomer. This improvement shows that the copolymer with 3-methyl-1-butene has good potential for use in applications where the optical requirements are strict, e. g. as lamination film.

Another surprise is that the tensile properties of the film are improved by using 3-methyl-1-butene: in particular the tensile stress at yield in the machine direction is increased.

Example 2

Raw Materials and Slurry Polymerization method

The same raw materials as in example 1 were used, including catalyst. The slurry polymerization method of example 1 was followed, except that stirring speed was maintained at 280 rpm and the level of hydrogen was varied.

Preparation of Polymer Pellets

The same procedure as described in example 1 was followed except that 90 % of the bench scale polymerized powder was mixed with 10 wt % LDPE, i. e. high pressure radical polymerized polyethylene, of density 923 $g/dm^3$ and $MFR_2$ 0.7 $g/dm^3$. Additivation was based on the combined weight. In addition, 400 ppmwt polymer processing additive (fluoroelastomer lubricant) Viton SAR-Z200 from Du Pont Performance Elastomers was added.

Preparation of Polymer Films

The same procedure as described in example 1 was followed except that the melt temperature was 205 °C, the screw speed was 90 rpm and the take off speed was 3.3 m/min.

Results

The polymerization results, analytical values as well as the results of the film testing are given in tables 2 and 3.

Table 2

| Run | | 1 | 2 | 3 | 4 | 5 | 6 | 7 | 8 | 9 | 10 | 11 | 12 |
|---|---|---|---|---|---|---|---|---|---|---|---|---|---|
| POLYMERISATION | | | | | | | | | | | | | |
| Catalyst feed | G | 1.54 | 1.26 | 1.34 | 2.67 | 2.77 | 2.81 | 2.99 | 2.99 | 2.91 | 2.82 | 2.40 | 2.34 |
| Hydrogen in ethylene feed | Molppm | 520 | 520 | 520 | 520 | 520 | 520 | 520 | 520 | 520 | 530 | 530 | 530 |
| Comonomer type* | - | MIB | MIB | MIB | 1-butene | 1-butene | 1-butene | 1-hexene | 1-hexene | 1-hexene | 1-octene | 1-octene | 1-octene |
| Comonomer start (as batch) | Ml | 50 | 50 | 50 | 50 | 50 | 50 | 50 | 50 | 50 | 60 | 60 | 60 |
| Comonomer continuous addition feed ratio | q/q 100 q ethylene | 28 | 31 | 33 | 6 | 6 | 8 | 9 | 9 | 6 | 12 | 12 | 10.725 |
| Run time | Min | 44 | 52 | 45 | 52 | 52 | 52 | 52 | 52 | 69 | 77 | 69 | 68 |
| Yield | G | 1860 | 1740 | 1680 | 1850 | 2030 | 1840 | 1860 | 1950 | 1830 | 1900 | 1660 | 1700 |
| Catalyst activity | q PE/(g cat, h, bar) | 392 | 379 | 398 | 190 | 201 | 180 | 171 | 179 | 130 | 125 | 143 | 153 |
| Catalyst residue # | g catalyst/kg PE | 0.83 | 0.72 | 0.80 | 1.44 | 1.36 | 1.53 | 1.61 | 1.53 | 1.59 | 1.48 | 1.45 | 1.38 |
| Transition metal residue # | μmol/kg PE | 17 | 14 | 16 | 29 | 27 | 31 | 32 | 31 | 32 | 30 | 29 | 28 |
| ANALYSES POWDER | | | | | | | | | | | | | |
| $MFR_2$ | q/10 min | 0.95 | 0.97 | 1.15 | 1.23 | 1.19 | 1.29 | 1.12 | 1.14 | 1.08 | 1.27 | 1.16 | 1.00 |
| $\eta^*$ (0,05 $s^{-1}$) | Pa s | 7,579 | 8,036 | 6,646 | 5,858 | 5,858 | 5,541 | 6,062 | 6,649 | 6,423 | 5,740 | 6,478 | 7,188 |
| $\eta^*$ (300$s^{-1}$) | Pa s | 1,428 | 1,414 | 1,357 | 1,338 | 1,341 | 1,296 | 1,300 | 1,348 | 1,306 | 1,150 | 1,205 | 1,257 |
| $M_w$ | g/mol | 120,000 | 120,000 | 115,000 | 110,000 | 110,000 | 110,000 | 110,000 | 115,000 | 115,000 | 110,000 | 115,000 | 1115,000 |
| $M_n$ | g/mol | 53,000 | 51,000 | 51,000 | 49,000 | 48,000 | 48,000 | 49,000 | 49,000 | 49,000 | 45,000 | 46,000 | 48,000 |
| $M_w/M_n$ | - | 2.3 | 2.4 | 2.3 | 2.2 | 2.3 | 2.3 | 2.2 | 2.3 | 2.3 | 2.4 | 2.5 | 2.4 |
| $M_z$ | g/mol | 210,000 | 225,000 | 210,000 | 195,000 | 195,000 | 190,000 | 190,000 | 200,000 | 200,000 | 205,000 | 205,000 | 215,000 |

(continued)

Table 2

| Run | | 1 | 2 | 3 | 4 | 5 | 6 | 7 | 8 | 9 | 10 | 11 | 12 |
|---|---|---|---|---|---|---|---|---|---|---|---|---|---|
| $M_v$ | g/mol | 110,000 | 110,000 | 105,000 | 105,000 | 105,000 | 100,000 | 100,000 | 105,000 | 105,000 | 100,000 | 100,000 | 105,000 |
| Comon. content (FT-IR) | wt % | 4.1 | 4.0 | 4.4 | 4.9 | 4.9 | 5.0 | 6.4 | 6.0 | 5.1 | 6.0 | 6.0 | 5.7 |
| Density | $kg/dm^3$ | 921 | 921 | 919.5 | 921 | 921 | 920 | 919 | 919 | 920 | 921 | 919.7 | 921 |
| ANALYSES PELLETS | | | | | | | | | | | | | |
| MFR2 | q/10 min | 0.92 | 0.87 | 1.00 | 1.10 | 1.20 | 1.20 | 1.10 | 1.00 | 1.00 | 1.20 | 1.00 | 0.96 |
| Density | $kg/dm^3$ | 921.8 | 922.0 | 919.8 | 921.5 | 921.7 | 921.0 | 917.1 | 918.5 | 920.2 | 921.7 | 920.6 | 921.7 |

Table 3

| Run (from Table 2) | | 1 | 2 | 3 | 4 | 5 | 6 | 7 | 8 | 9 | 10 | 11 | 12 |
|---|---|---|---|---|---|---|---|---|---|---|---|---|---|
| FILM TESTING | | | | | | | | | | | | | |
| General | | | | | | | | | | | | | |
| - Film thickness | µm | 41 | 42 | 47 | 45 | 46 | 45 | 43 | 44 | 40 | 47 | 45 | 46 |
| - Haze | % | 9.6 | 9.6 | 7.4 | 8.4 | 8.8 | 8.0 | 4.9 | 6.1 | 6.8 | 11.5 | 10.8 | 11.3 |
| - Gloss | % | 116 | 113 | 122 | 126 | 126 | 129 | 128 | 124 | 129 | 107 | 110 | 110 |
| - Dart drop | G | 295 | 275 | 440 | 210 | 200 | 205 | 1250 | 630 | 400 | 450 | 650 | 610 |
| - Minimum fusion temperature | °C | 125 | 125 | 125 | 125 | 125 | 125 | 115 | 120 | 125 | 125 | 125 | 125 |
| Tensile tests machine direction (MD) | | | | | | | | | | | | | |
| - Secant modulus | MPa | 240 | 240 | 220 | 240 | 235 | 225 | 190 | 195 | 225 | 245 | 235 | 235 |
| - Tensile strength | MPa | 44 | 44 | 43 | 37 | 37 | 36 | 52 | 50 | 51 | 48 | 48 | 48 |
| - Tensile strain at break | % | 695 | 695 | 690 | 740 | 775 | 745 | 650 | 640 | 670 | 690 | 670 | 650 |
| Tensile tests transverse direction (TD) | | | | | | | | | | | | | |
| - Secant modulus | MPa | 255 | 260 | 230 | 220 | 225 | 240 | 170 | 195 | 225 | 240 | 240 | 255 |
| - Tensile strength | MPa | 45 | 44 | 43 | 35 | 34 | 36 | 51 | 50 | 53 | 43 | 51 | 51 |
| - Tensile strain at break | % | 730 | 720 | 695 | 745 | 730 | 755 | 655 | 675 | 700 | 675 | 690 | 705 |
| Puncture resistance | | | | | | | | | | | | | |
| - Strength | N | 96 | 97 | | 78 | 72 | 74 | 112 | 113 | 84 | 102 | 100 | 93 |
| - Energy | J | 7.6 | 7.9 | | 5.2 | 4.3 | 4.7 | 10.5 | 11.2 | 6.5 | 8.3 | 8.6 | 7.1 |
| - Elongation | Mm | 135 | 140 | | 110 | 98 | 104 | 155 | 155 | 125 | 140 | 145 | 125 |

* MIB: 3-methyl-1-butene
\# Calculated from measured yield.

Some of the results in Table 3 are also shown in the Figures.

Figure 1 shows dart drop (film impact strength) plotted versus stiffness. Stiffness is an end use property than in itself should be high, but must usually be compromised in order to achieve other useful properties. Surprisingly the dart drop of the 3-methyl-1-butene copolymer blends is at least as good as that of the hexene copolymer blends that are more difficult and expensive to produce. This is unexpected because 3-methyl-1-butene is a molecule of lower molecular weight than hexene. As is known (and evident from the results in Figure 1) the dart drop of copolymer increases with molecular weight of the comonomer in the order propylene, butene, hexene and octene. The C5 comonomer, 3-methyl-1-butene, would have been expected to fall in between butene and hexene, but it is better than expected.

Figure 2 shows puncture strength plotted versus stiffness and it can be seen that the puncture resistance of the 3-methyl-1-butene copolymer blends is unexpectedly good. For any given stiffness, the 3-methyl-1-butene copolymer blends are clearly better than all the other copolymer blends including the copolymer blend comprising octene.

Figures 3 and 4 show haze and gloss plotted against stiffness, i. e. they show the optical properties of the copolymer blends. The optical properties of the 3-methyl-1-butene copolymer blends are better than those of the octene copolymer blends, and are comparable with the hexene copolymer blends. Thus the 3-methyl-1-butene copolymer blends are better than what was expected from the average of the properties of the butene and octene blends.

Figure 5 shows minimum fusion temperature plotted against density and shows that the sealing properties of the 3-methyl-1-butene copolymer blends are at least on level with the other copolymer blends.

The films of the present invention therefore have surprisingly high impact strength and unique puncture resistance, as well as, comparable optical and sealing properties to copolymer blends made with conventional linear 1-alkenes. The films of the present invention thus provide a highly desirable combination of properties.

## Claims

**1.** A film, comprising:

a low density polyethylene (LDPE)
and
an interpolymer of ethylene and 3-methyl-1-butene,
wherein the amount of 3-methyl-1-butene monomer present in the interpolymer is 0.01 to 40 wt-%,
and the amount of ethylene monomer present in the interpolymer is 60 to 99.99 wt-%,
whereby the term "interpolymer" refers to polymers comprising repeat units deriving from ethylene and 3-methyl-1-butene,
and whereby when it stated herein that the amount of a given monomer present in a polymer is a certain amount, it is to be understood that the monomer is present in the polymer in the form of a repeat unit,
wherein said interpolymer is prepared using a catalyst system comprising a metallocene-containing catalyst system,
wherein the film having a haze according to ASTM D 1003 of less than 12 % and wherein the film having a puncture resistance according to ASTM D5748 of at least 1.75 N/μm.

**2.** The film as claimed in claim 1, wherein said catalyst system is in particulate form.

**3.** The film as claimed in claims 1 to 2, wherein said catalyst system comprises a carrier.

**4.** The film as claimed in claims 1 to 3, wherein said alkene interpolymer has a Mw of 20 000 to 900 000.

**5.** The film as claimed in claims 1 to 4, wherein said alkene interpolymer has a $MFR_2$ of 0.01-5000.

**6.** The film as claimed in claims 1 to 5, wherein said alkene interpolymer is unimodal.

**7.** The film as claimed in claims 1 to 6, having a gloss according to ASTM D 2457 of greater than 80 %.

**8.** The film as claimed in claims 1 to 7, having a dart drop according ISO 7765/1 to of at least 3.75 g/μm.

**9.** A process for the preparation of a film, comprising: blowing an interpolymer of ethylene and a 3-substituted $C_{4-10}$ alkene, to obtain a film as claimed in claim 1.

**10.** The use of a film comprising: a low density polyethylene (LDPE)

and
an interpolymer of ethylene and 3-methyl-1-butene,
wherein the amount of 3-methyl-1-butene monomer present in the interpolymer is 0.01 to 40 wt-%,
and the amount of ethylene monomer present in the interpolymer is 60 to 99.99 wt-%, whereby the term "interpolymer" refers to polymers comprising repeat units deriving from ethylene and 3-methyl-1-butene,
and whereby when it stated herein that the amount of a given monomer present in a polymer is a certain amount, it is to be understood that the monomer is present in the polymer in the form of a repeat unit,
wherein said interpolymer is prepared using a catalyst system comprising a metallocene-containing catalyst system,
in at least one of the following applications:

shipping sacks, heavy duty shipping sacks (HDSS), stretch hoods, stretch wraps, liners, industrial shrink film, building and constructing films, air and moisture membranes, barrier films, geomembranes, agricultural films.

## Patentansprüche

**1.** Film, umfassend:

ein Polyethylen mit niedriger Dichte (LDPE);
und
ein Interpolymer von Ethylen und 3-Methyl-1-buten,
wobei die Menge an 3-Methyl-1-buten-Monomer, das in dem Interpolymer vorhanden ist, 0,01 bis 40 Gew.-% beträgt,
und die Menge an Ethylen-Monomer, das in dem Interpolymer vorhanden ist, 60 bis 99,99 Gew.-% beträgt,
wobei der Begriff "Interpolymer" Polymere bezeichnet, die Wiederholungseinheiten umfassen, die aus Ethylen und 3-Methyl-1-buten abgeleitet sind,
und wobei, wenn hierin angegeben wird, dass die Menge eines gegebenen Monomers, das in einem Polymer vorhanden ist, eine bestimmte Menge beträgt, zu beachten ist, dass das Monomer in dem Polymer in der Form einer Wiederholungseinheit vorhanden ist,
wobei das Interpolymer unter Verwendung eines Katalysatorsystems, das ein Metallocenenthaltendes Katalysatorsystem umfasst, hergestellt ist,
wobei der Film eine Trübung gemäß ASTM D 1003 von weniger als 12 % aufweist
und wobei der Film eine Durchstoßfestigkeit gemäß ASTM D 5748 von wenigstens 1,75 N/$\mu$m aufweist.

**2.** Film gemäß Anspruch 1, wobei das Katalysatorsystem in Partikulatform vorliegt.

**3.** Film gemäß Ansprüchen 1 bis 2, wobei das Katalysatorsystem einen Träger umfasst.

**4.** Film gemäß Ansprüchen 1 bis 3, wobei das Alken-Interpolymer ein Mw von 20.000 bis 900.000 aufweist.

**5.** Film gemäß Ansprüchen 1 bis 4, wobei das Alken-Interpolymer ein $MFR_2$ von 0,01-5000 aufweist.

**6.** Film gemäß Ansprüchen 1 bis 5, wobei das Alken-Interpolymer unimodal ist.

**7.** Film gemäß Ansprüchen 1 bis 6 mit einem Glanzwert gemäß ASTM D 2457 von höher als 80 %.

**8.** Film gemäß Ansprüchen 1 bis 7 mit einem Durchstoßwert gemäß ISO 7765/1 von wenigstens 3,75 N/$\mu$m.

**9.** Verfahren zum Herstellen eines Films, umfassend: Blasen eines Interpoylmers von Ethylen und einem 3-substituierten $C_{4-10}$-Alken, um einen Film gemäß Anspruch 1 zu erhalten.

**10.** Verwendung eines Films umfassend: ein Polyethylen mit niedriger Dichte (LDPE);
und
ein Interpolymer von Ethylen und 3-Methyl-1-buten, wobei die Menge an 3-Methyl-1-buten-Monomer, das in dem Interpolymer vorhanden ist, 0,01 bis 40 Gew.-% beträgt,
und die Menge an Ethylen-Monomer, das in dem Interpolymer vorhanden ist, 60 bis 99,99 Gew.-% beträgt,
wobei der Begriff "Interpolymer" Polymere bezeichnet, die Wiederholungseinheiten umfassen, die aus Ethylen und 3-Methyl-1-buten abgeleitet sind,

und wobei, wenn hierin angegeben wird, dass die Menge eines gegebenen Monomers, das in einem Polymer vorhanden ist, eine bestimmte Menge beträgt, zu beachten ist, dass das Monomer in dem Polymer in der Form einer Wiederholungseinheit vorhanden ist,
wobei das Interpolymer unter Verwendung eines Katalysatorsystems, das ein Metallocenenthaltendes Katalysatorsystem umfasst, hergestellt ist,
bei wenigstens einer der folgenden Anwendungen:

Versandsäcke, strapazierfähige Versandsäcke (HDSS), Streckhauben, Streckfolien, Auskleidungen, industrieller Schrumpffilm, Gebäude- und Baustofffilme, Luft- und Feuchtemembranen, Barrierefilme, Geomembranen, landwirtschaftliche Filme.

## Revendications

**1.** Film, comprenant :

un polyéthylène basse densité (PE-BD)
et
un interpolymère d'éthylène et de 3-méthylbut-1-ène,

dans lequel la quantité de monomère 3-méthylbut-1-ène présent dans l'interpolymère est de 0,01 à 40 % en poids et la quantité de monomère éthylène présent dans l'interpolymère est de 60 à 99,99 % en poids,
le terme « interpolymère » faisant référence à des polymères comprenant des motifs répétés issus d'éthylène et de 3-méthylbut-1-ène et,
lorsqu'il est indiqué ici que la quantité d'un monomère donné présent dans un polymère est une certaine quantité, le monomère devant être entendu comme étant présent dans le polymère sous la forme d'un motif répété,
dans lequel ledit interpolymère est préparé à l'aide d'un système catalyseur comprenant un système catalyseur contenant un métallocène,
le film ayant un trouble selon la norme ASTM D 1003 inférieur à 12 %
et le film ayant une résistance à la perforation selon la norme ASTM D5748 d'au moins 1,75 N/μm.

**2.** Film selon la revendication 1, dans lequel ledit système catalyseur est sous forme particulaire.

**3.** Film selon les revendications 1 à 2, dans lequel ledit système catalyseur comprend un support.

**4.** Film selon les revendications 1 à 3, dans lequel ledit interpolymère d'alcènes a une Mw de 20 000 à 900 000.

**5.** Film selon les revendications 1 à 4, dans lequel ledit interpolymère d'alcènes a un $MFR_2$ de 0,01-5000.

**6.** Film selon les revendications 1 à 5, dans lequel ledit interpolymère d'alcènes est unimodal.

**7.** Film selon les revendications 1 à 6, ayant un brillant selon la norme ASTM D 2457 supérieur à 80 %.

**8.** Film selon les revendications 1 à 7, ayant une résistance au choc au mouton selon la norme ISO 7765/1 d'au moins 3,75 g/μm.

**9.** Procédé pour la préparation d'un film, comprenant : le soufflage d'un interpolymère d'éthylène et d'un alcène en $C_{4-10}$ substitué en position 3, pour obtenir un film selon la revendication 1.

**10.** Utilisation d'un film comprenant :

un polyéthylène basse densité (PE-BD)
et
un interpolymère d'éthylène et de 3-méthylbut-1-ène,

dans laquelle la quantité de monomère 3-méthylbut-1-ène présent dans l'interpolymère est de 0,01 à 40 % en poids et la quantité de monomère éthylène présent dans l'interpolymère est de 60 à 99,99 % en poids,
le terme « interpolymère » faisant référence à des polymères comprenant des motifs répétés issus d'éthylène et de

3-méthylbut-1-ène et,
lorsqu'il est indiqué ici que la quantité d'un monomère donné présent dans un polymère est une certaine quantité, le monomère devant être entendu comme étant présent dans le polymère sous la forme d'un motif répété,
dans laquelle ledit interpolymère est préparé à l'aide d'un système catalyseur comprenant un système catalyseur contenant un métallocène,
dans au moins l'une des applications suivantes :

des sacs de transport, des sacs de transport très résistants (HDSS), des housses étirables, des films étirables, des doublures, du film rétractable industriel, des films pour le bâtiment et la construction, des membranes d'étanchéité à l'air et à l'humidité, des films barrières, des géomembranes, des films agricoles.

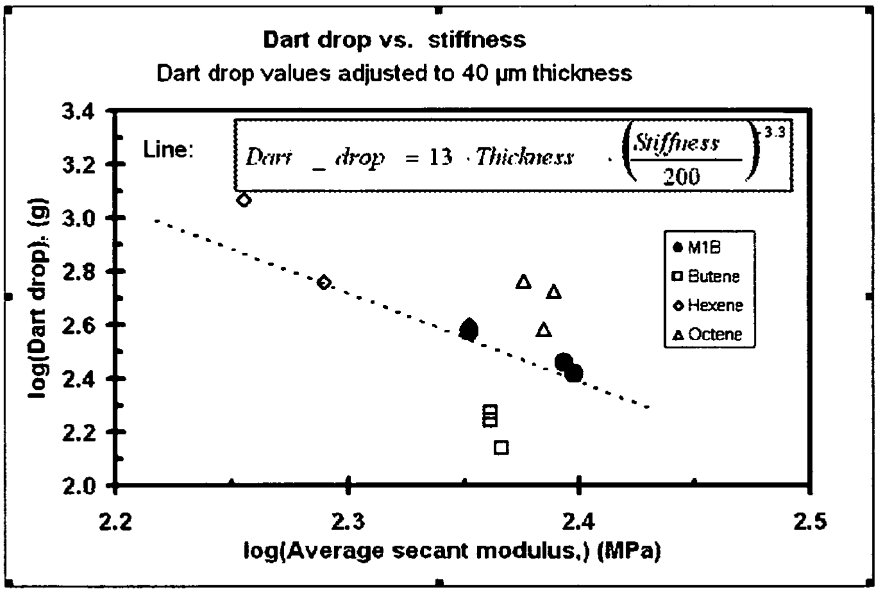


Figure 1

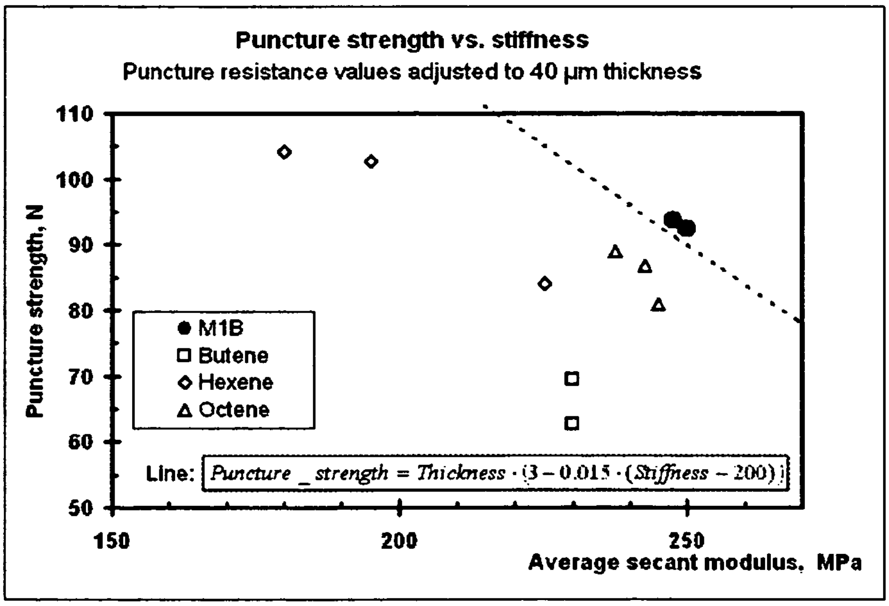


Figure 2

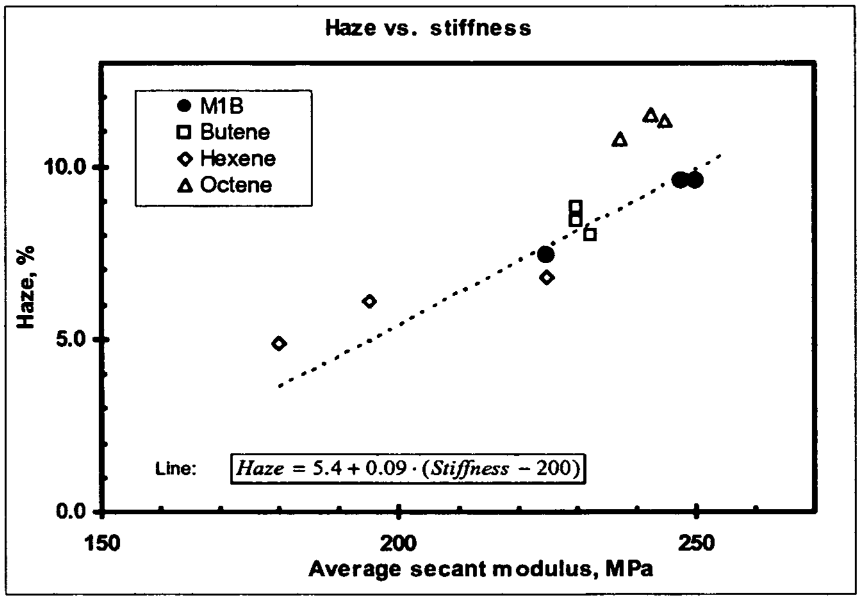


Figure 3

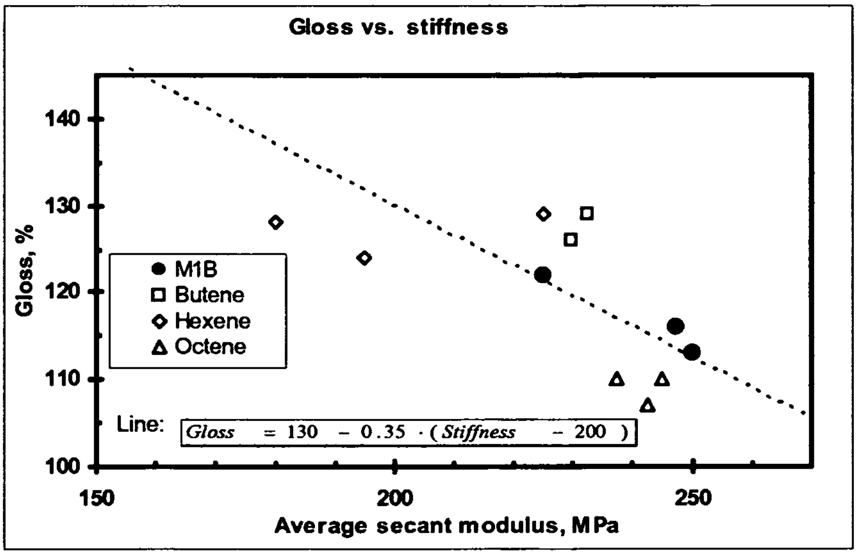


Figure 4

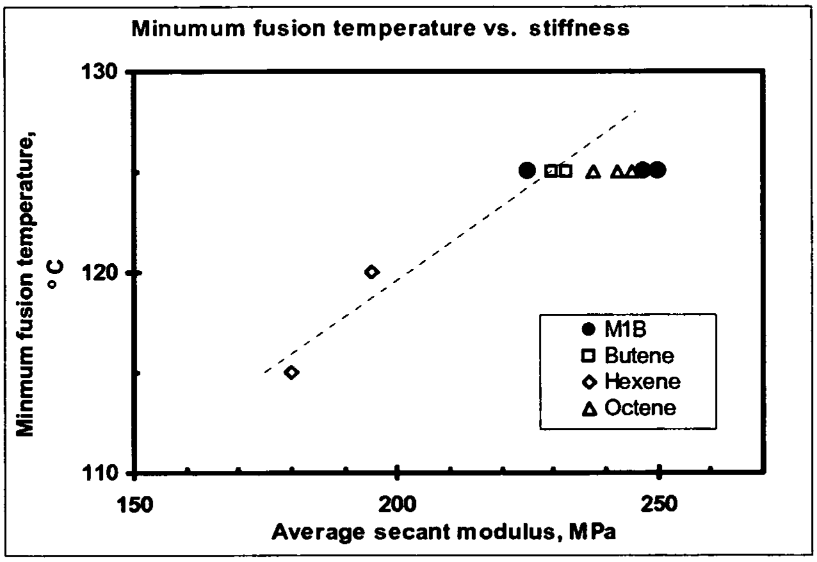
Minumum fusion temperature vs. stiffness
130
120
110
Minmum fusion temperature, ° C
150
200
250
Average secant modulus, MPa
M1B
Butene
Hexene
Octene

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008006636 A
- EP 1197501 A
- WO 2008003020 A
- WO 2008006633 A
- WO 9802246 A
- US 6982311 B
- EP 520732 A
- US 7312283 B
- US 20030022998 A
- US 5880241 A
- US 6787608 B
- US 6350829 B
- EP 279863 A
- WO 9323439 A
- EP 793678 A
- WO 9600245 A
- WO 9729134 A
- WO 9731038 A
- EP 810344 A
- EP 792297 A
- EP 1246849 A
- EP 1323747 A
- EP 0993478 A
- EP 1360213 A


### Non-patent literature cited in the description


- **G.J.P. BRITOVSEK et al.** The Search for New-Generation Olefin Polymerization Catalysts: Life beyond Metallocenes. *Angew. Chemie Int. Ed.,* 1999, vol. 38, 428
- **H. MAKIO et al.** FI Catalysts: A New Family of High Performance Catalysts for Olefin Polymerization. *Advanced Synthesis and Catalysis,* 2002, vol. 344, 477
- The Wiley Encyclopedia of Packaging Technology. John Wiley and Sons, Inc, 1997